# EUROPEAN PATENT APPLICATION

(11) **EP 0 789 361 A2**
(43) Date of publication of application: **13.08.1997**
(21) Application number: 97300766.9
(22) Date of filing: 06.02.1997
(51) Int. Cl.: G11B 27/034, G11B 20/00, H04N 7/16, G06F 1/00

(54) **Data reception apparatus, data transmission apparatus, information processing system, data reception method and information record medium storing the data reception method suitable for preventing illegal copy of documents**

(30) Priority: 06.02.1996 JP 19591/96; 08.07.1996 JP 177629/96
(71) Applicant: MATSUSHITA ELECTRIC INDUSTRIAL CO., LTD., Kadoma-shi, Osaka 571 (JP)
(72) Inventor: Yamauchi, Kazuhiko, Neyagawa-shi, Osaka-fu 572 (JP); Kozuka, Masayuki, Neyagawa-shi, Osaka-fu 572 (JP); Ueda, Hiroshi, Hirakata-shi, Osaka-fu 573 (JP); Fukushima, Yoshihisa, Osaka-shi, Osaka-fu 536 (JP); Endo, Koichiro, Osaka-shi, Osaka-fu, Osaka-fu 534 (JP); Tatebayashi, Makoto, Takarazuka-shi, Hyogo-ken 665 (JP); Harada, Syunji, Osaka-shi, Osaka-fu 557 (JP)
(74) Representative: Crawford, Andrew Birkby

(57) **Abstract**

A data reception apparatus is provided for receiving digital data sent from a data transmission apparatus via a transmission path and recording the received digital data into an external medium. The digital data includes image data and a use-form-specified code that specifies a use form of the image data. The data reception apparatus is comprised of: an authentication unit for judging whether the data transmission apparatus is a formal data transmission apparatus for authentication; a reception unit for receiving the digital data; copy judgement unit for judging whether recording of the digital data into the external medium is permitted by referring to the use-form-specified code included in the received digital data; and a record unit for recording the digital data into the external medium if the authentication unit judges that the data transmission apparatus is the formal data transmission apparatus and the copy judgement unit judges that recording of the digital data into the external medium is permitted.

## Description

### BACKGROUND OF THE INVENTION

### (1) Field of the Invention

This invention relates to a data transmission apparatus for reading digital data from information record medium in which documents are stored as digital data and outputting the read digital data, a data reception apparatus for receiving the digital data output from the data transmission apparatus, reproducing images and storing the digital data as secondary recording, and an information processing system including the data transmission apparatus and the data reception apparatus, more spcifically to a data transmission apparatus suitable for preventing illegal copy of the documents.

### (2) Description of the Prior Art

The Compact Disc Read Only Memory (CD-ROM) is widely known as information record medium for storing program data, voice information, and image information. CD-ROMs, being read-only optical disks with 540MB of information capacity, are widely used as media for distributing program data, voice information, and image information. Personal computers with built-in CD-ROM drive are known as information processing systems which read information from CD-ROMs to process the information.

Recently, it has become possible to output voices and images in the CD-ROMs directly on the personal computers due to improvement in the environment for processing voice information and image information in personal computers. However, it is required to digitally compress the image information to record it into CD-ROMs since the image information has a large amount of data compared to the program data and the like.

Moving Picture Experts Group 1 (MPEG1) is a known standard which specifies that image information is compressed with transfer rate 1.2Mbps. According to MPEG1, the image information is compressed mainly by means of frames compression. The image information is identical to moving pictures which are comprised of several tens of still pictures per second. In the frames compression, one frame out of several frames has enough data to reproduce a still picture, and the other frames have only a difference which is a result of subtracting common data from the enough data.

In reality, under MPEG1, a mixture of image information and voice information are compressed into digital data called MPEG system streams. As a result, it is difficult to divide the digital data into image information and voice information. Such mixed information of image information, voice information, and information required to reproduce these types of information is often called AV data, or data having Audio and Video (AV) data structure. In the present specification, mixed information of at least image information and voice information is called "AV data." Also, digital data which is not the AV data is called "non-AV data."

MPEG1 mentioned above supports images with horizontal resolution of about 2501pi (lines per inch). It is considered that this resolution is not enough to provide high-quality images which are required in movie applications and the like. Conventionally, Laser Disks (LDs), containing analog image information with horizontal resolution of about 4301pi, have been used as a medium for including an application with high-quality images. However, analog data may not be processed by computers. Recently, Digital Versatile Disks (DVDs) have been brought into market. DVDs are optical disks written in the digital format which computers deal with, having enough resolution for movie applications. DVDs have storage capacity of digital data eight times as that of CD-ROMs, with data transfer rate five times as that of CD-ROMs. Accordingly, DVDs adopt MPEG2 as the data compression method. MPEG2 achieves 4501pi or more in horizontal resolution, achieving high-quality moving pictures applicable to movie applications.

The following is a description of a personal computer with a CD-ROM drive with reference to the drawings, the personal computer being an information processing system for directly reproducing the AV data in a personal computer.

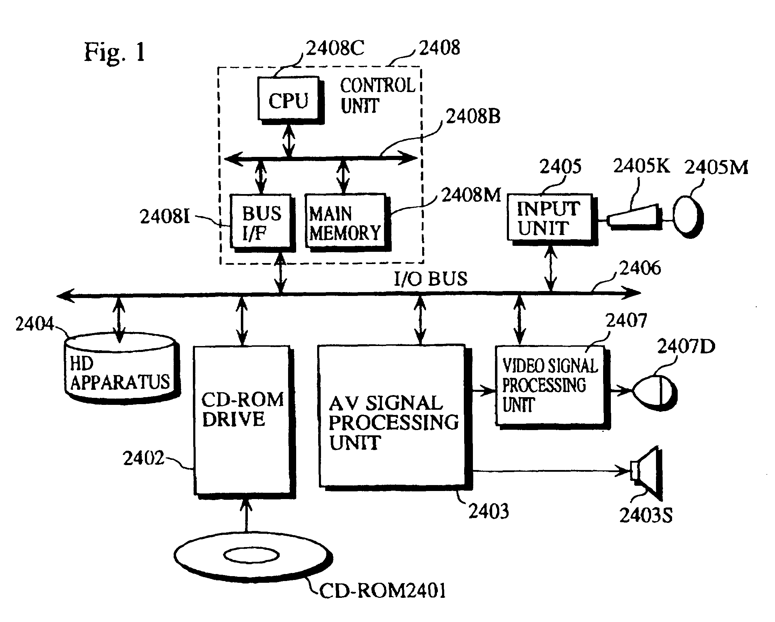

Fig.1 shows the construction of a conventional personal computer with a CD-ROM drive.

CD-ROM 2401 is an information record medium in which digital data is recorded and the MPEG streams, namely AV data, are managed and recorded by the filing system.

CD-ROM drive 2402 reads digital data with a sector number from the specified sector on CD-ROM 2401 and outputs the read data to an external element.

AV signal processing unit 2403 decompresses an input MPEG stream, converts the MPEG stream into an analog voice signal and image data, then outputs the analog voice signal and the image data to an external element. The output analog voice signal is output from speaker 2403S as a voice.

HD apparatus 2404 is a hard disk apparatus.

Input unit 2405 is a port which receives a command input by the user through mouse 2405M or keyboard 2405K.

I/O bus 2406 is an internal bus that connects each component of the computer.

Video signal processing unit 2407 combines the image data output from AV signal processing unit 2403 with the image data for display generated in the personal computer, converts the combined data into an analog image signal, and outputs the analog signal to display apparatus 2407D. The video signal processing unit 2407 is typically called a video card.

Control unit 2408 control the whole computer and is comprised of CPU 2408C connected to processor bus 2408B, bus InterFace (I/F) 2408I, and main memory 2408M. Loaded into main memory 2408M of control unit 2408 are an Operating System (OS) and a control program: the OS manages the filing system; the control program, as an application that runs under the OS, reproduces/copies data recorded in CD-ROM 2401 according to a user instruction. Display apparatus 2407D displays a graphic user interface generated by the control program loaded in control unit 2408.

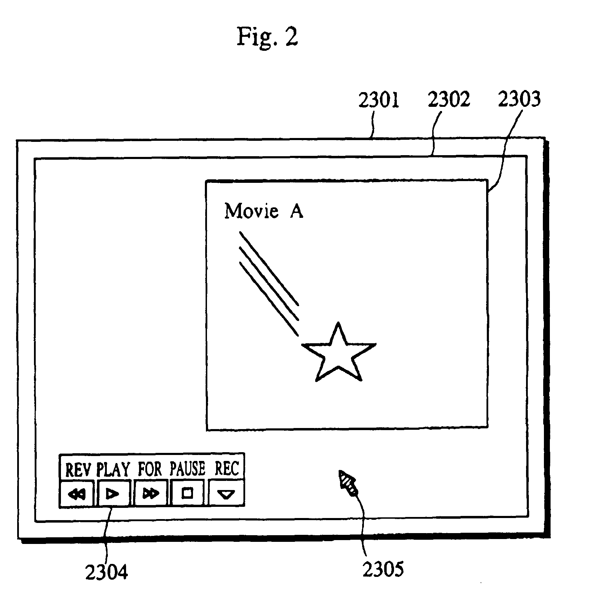

Fig.2 is the front view of display apparatus 2407D.

2301 indicates a front frame of display apparatus 2407D, 2302 a display area, 2303 an MPEG moving picture display area, 2304 a control panel display area, and 2305 a graphic symbol which indicates a coordinate position on the screen specified by the user through keyboard 2405K or mouse 2405M and through input unit 2405.

Now, the personal computer with a CD-ROM drive constructed as above is described in terms of its operation.

Note that the operation is not described in detail but operations relevant to the present invention, that is, an operation for reproducing the AV data on CD-ROM 2401 and an operation for copying a file on CD-ROM 2401 to HD apparatus 2404. This is because the operation as a whole is the same as that of a general-purpose personal computer (e.g., an IBM PC/AT compatible).

Note that "reproduce" means to restore from the AV data an image or a voice a human being can see or hear and that "copy" means to read information from a medium and record the information into another medium as it is.

The following is a description of AV data reproduction operation.

When the user specifies key symbol "PLAY" displayed on control panel display area 2304 with mouse 2405M connected to input 2405, control unit 2408 recognizes the specification as reproduction control instruction "REPRODUCTION START" judging from the input coordinates. Control unit 2408, according to the filing system, calculates the record address of the file on CD-ROM 2401 which stores a predetermined MPEG stream for the reproduction start. Control unit 2408 sends the data read instruction (READ #Address) to CD-ROM drive 2402 for reading the data stored in the calculated address, then outputs the read digital data to AV signal processing unit 2403 with the data write instruction (WRITE). AV signal processing unit 2403 converts the input digital data, namely, an MPEG stream, into an analog voice signal and image data, then outputs the analog voice signal and the image data. The analog voice signal is output from a speaker as a voice and the image data is input to video signal processing unit 2407 to be combined with the image data for the display of the computer system, then output from display apparatus 2407D as an image. In this way, the MPEG stream read from CD-ROM 2401 is displayed in MPEG moving picture display area 2303 on display apparatus 2407D.

The following is a description of the operation of copying a file stored in CD-ROM 2401 to HD apparatus 2404.

Input unit 2405 receives a command input by the user through keyboard 2405K. When the input command is the copy instruction for copying a file stored in CD-ROM 2401 to HD apparatus 2404, then control unit 2408, according to the filing system, calculates the record address of the file on CD-ROM 2401 to be read. Control unit 2408 reads the digital data stored in the calculated address from CD-ROM drive 2402 with the data read instruction (READ #Address), then outputs the read digital data and records it into HD apparatus 2404 with the data write instruction (WRITE).

In this way, in the above conventional information processing system, the AV data stored in a information record medium is reproduced or copied according to the user instruction.

However, in such a conventional information processing system, the digital data read from CD-ROM 2401 is not divided into the AV data and the non-AV-data, and is processed the same by control unit 2408. With such processing, it is difficult to process the AV data for copyright protection.

Note that "to process data for copyright protection" means to process the data to allow the user to use the AV data in the information processing system with limited use forms specified by the copyright owner. The "use forms" include, for example, a permission, concerning the AV data, given to users limited to the reproduction of the AV data (this means it prohibits copying the AV data to a HD apparatus and the like), or a permission to reproduce and copy.

However, with the above conventional construction of the apparatus, even if the user, by error, specifies an instruction to copy to HD apparatus 2404 a file that stoes a piece of AV data not permitted by the copyright owner CD-ROM drive 2402 receives the same data read instruction (READ #Address) as it receives when the reproduction instruction is specified. As a result, the AV data is output from CD-ROM drive 2402 and copied to HD apparatus 2404, same as general data is.

There is another problem. The operation of control unit 2408 is determined dynamically by the OS or the reproduction control program loaded in the main memory. If a program with an error is loaded, a file storing the AV data the copy of which is not permitted may be copied with a malfunction, irrelevant to an intention of the user.

Accordingly, there is a possibility that the AV data the copy of which is prohibited by the copyright owner may be copied into a HD apparatus and the like in secondary recording. This means the copyright of the AV data is not protected. This problem is remarkable in applications which include high-quality pictures of high horizontal resolution. To solve this problem, the medium price may be raised to include the loss generated by the copyright infringement; movie applications with high copyright values may not be produced. When this happens, sound markets in which a large number of applications are provided for users with appropriate prices may not be maintained. This will put the users at great disadvantages.

### SUMMARY OF THE INVENTION

It is therefore an object of the present invention to provide such a data reception apparatus, a data transmission apparatus, an information processing system, a data reception method, and an information record medium in which the method is recorded as facilitate the copyright protection of AV data. That is, it is an object of the present invention to provide such a data reception apparatus and the like as secure that the AV data recorded in the information record medium is processed only with the use forms specified by the copyright owner.

The above object is achieved by a data reception apparatus for receiving digital data sent from a data transmission apparatus via a transmission path and recording the received digital data into an external medium, wherein the digital data includes image data and a use-form-specified code that specifies a use form of the image data, the data reception apparatus comprising: authentication means for judging whether the data transmission apparatus is a formal data transmission apparatus for authentication; reception means for receiving the digital data; copy judgement means for judging whether recording of the digital data into the external medium is permitted by referring to the use-form-specified code included in the received digital data; and record means for recording the digital data into the external medium if the authentication means judges that the data transmission apparatus is the formal data transmission apparatus and the copy judgement means judges that recording of the digital data into the external medium is permitted.

With the above construction, it is possible to prevent such an illegal copy of image data in which the image data is copied to a data reception apparatus such as a record apparatus exceeding the range of use forms specified by the copyright owner.

In the above data reception apparatus, the use-form-specified code may include a maximum generation value which indicates an uppermost generation value in permitting the image data to be copied, andthe copy judgement means may judge that recording of the digital data into the external medium is permitted if the maximum generation value of the use-form-specified code is at least one.

With such a construction, it is possible to judge the copy permission from only the number of generations permitted to copy.

In the above data reception apparatus, the record means may include an update unit for updating the use-form-specified code by reducing the maximum generation value by one before the record means records the digital data into the external medium

With such a construction, it is possible to prevent illegal copies exceeding the limited number of generations.

In the above data reception apparatus, the record means may further include a reception data exchange unit for converting the image data into meaningless data before the record means records the digital data into the external medium if either of following two conditions is satisfied: the authentication means judges that the data transmission apparatus is not the formal data transmission apparatus; and the copy judgement means judges that recording of the digital data into the external medium is not permitted.

With such a construction, it is possible to prevent the image data from being used as it is.

In the above data reception apparatus, the external medium may be a information record medium, wherein the record means records the image data into a user data area in the information record medium and records the use-form-specified code into a header area corresponding to the user data area.

With such a construction, it is possible for the copyright owner to specify the use forms of image data in units of the user data areas.

In the above data reception apparatus, the authentication means may transmit authentication data to the data transmission apparatus, wherein the authentication data is generated based on a random number, wherein the authentication means judges whether the data transmission apparatus is a formal data transmission apparatus for authentication by using proof data sent from the data transmission apparatus in response to the authentication data.

With such a construction, it is possible to exclude illegal copies which are generated from the authentication that uses the same data.

In the above data reception apparatus, the image data may have been encrypted in advance, wherein the record means includes a decryption unit for decrypting the image data before the record means records the digital data into the external medium.

With such a construction, it is possible to prevent illegal or malfunctional extraction of image data during the data transfer.

In the above data reception apparatus, the decryption unit may generate the decryption key based on the authentication data and decrypts the image data by using the decryption key.

With such a construction, it is possible to achieve a tighter copy guard due to the correspondence between the authentication and the decryption.

The above object is also achieved by a data transmission apparatus for retrieving digital data from an external medium and transmitting the digital data to a data reception apparatus via a transmission path, wherein the digital data includes user data and a use-form-specified code that specifies a use form of the user data, the data transmission apparatus comprising: data retrieval means for retrieving the digital data from the external medium; data type judgement means for judging whether the user data included in the digital data is image data; authentication means for, for authentication, judging whether the data reception apparatus is a formal data reception apparatus, which is allowed to process the image data, by referring to the use-form-specified code; and transmission means for transmitting the digital data to the data reception apparatus via the transmission path if the authentication means judges that the data reception apparatus is the formal data reception apparatus.

With such a construction, it is possible to secure that the AV data recorded in the information record medium is processed only with the use forms specified by the copyright owner.

In the above data transmission apparatus, the use-form-specified code specifies whether a reproduction of the image data is permitted and whether copying of the image data is permitted, wherein the authentication means authenticates the data reception apparatus as the formal data reception apparatus if the use-form-specified code specifies that only the reproduction of the image data is permitted and if the data reception apparatus performs only reproduction, and the authentication means authenticates the data reception apparatus as the formal data reception apparatus if the use-form-specified code specifies that only copying of the image data is permitted and if the data reception apparatus records the image data.

With such a construction, it is possible to prevent illegal actions or malfunctions in which the image data is transferred from the data transmission apparatus to an apparatus that does not deal with image data.

In the above data transmission apparatus, the use-form-specified code may include a maximum generation value which indicates an uppermost generation value in permitting the image data to be copied, wherein the authentication means authenticates the data reception apparatus as the formal data reception apparatus if if the data reception apparatus records the image data and if the maximum generation value of the use-form-specified code is at least one.

With such a construction, it is possible to judge the copy permission from only the number of generations permitted to copy.

In the above data transmission apparatus, the transmission means may include a transmission data exchange unit for converting the image data into meaningless data before the transmission means transmits the digital data if the authentication means does not authenticate the data reception apparatus as the formal data reception apparatus.

With such a construction, it is possible to prevent the image data from being used illegally as it is.

In the above data transmission apparatus, the digital data may further include a data attribute code which indicates an attribute of the user data, wherein the data type judgement means judges whether the user data included in the digital data is image data based on a value of the data attribute code.

With such a construction, it is possible to distinguish the image data from general digital data and prevent the image data from being illegally read from the information record medium.

In the above data transmission apparatus, the external medium may be a information record medium which prestores the digital data, wherein the data retrieval means retrieves the data attribute code and the use-form-specified code from a header area corresponding to a user data area in the information record medium, wherein the user data area is an area in which the user data is stored.

With such a construction, it is possible for the copyright owner to specify the use forms of image data in units of the user data areas.

In the above data transmission apparatus, the authentication means may transmit authentication data to the data reception apparatus, wherein the authentication data is generated based on a random number, wherein the authentication means judges whether the data reception apparatus is the formal data reception apparatus for authentication by using proof data sent from the data reception apparatus in response to the authentication data.

With such a construction, it is possible to exclude illegal copies which are generated from the authentication that uses the same data.

In the above data transmission apparatus, the transmission means may include an encryption unit for encrypting the user data in the digital data before the transmission means transmits the digital data.

With such a construction, it is possible to prevent illegal or malfunctional extraction of image data during the data transfer.

In the above data transmission apparatus, the encryption unit may generate the encryption key based on the authentication data and encrypts the user data by using the encryption key.

With such a construction, it is possible to achieve a tighter copy guard due to the correspondence between the authentication and the encryption.

The above object is also achieved by an information processing system which is comprised of the above data transmission apparatus and the above data reception apparatus.

The procedure of the copy guard performed in the above data reception apparatus may be achieved as a program.

As understood from the above description, the present invention secures the copyright of applications. This will encourage a lot of applications to be brought into market with appropreate prices, securing the advantages of general users.

These and other objects, advantages and features of the invention will become apparent from the following description thereof taken in conjunction with the accompanying drawings which illustrate a specific embodiment of the invention. In the drawings:
Fig.1 is a block diagram showing the construction of a conventional personal computer with a CD-ROM drive;
Fig.2 is the front view of display apparatus 2407D;
Fig.3 shows an appearance of the information processing system of the first embodiment;
Fig.4 is a block diagram showing the construction of the information processing system of the first embodiment;
Figs.5(a) and 5(b) show the format of the device attribute information;

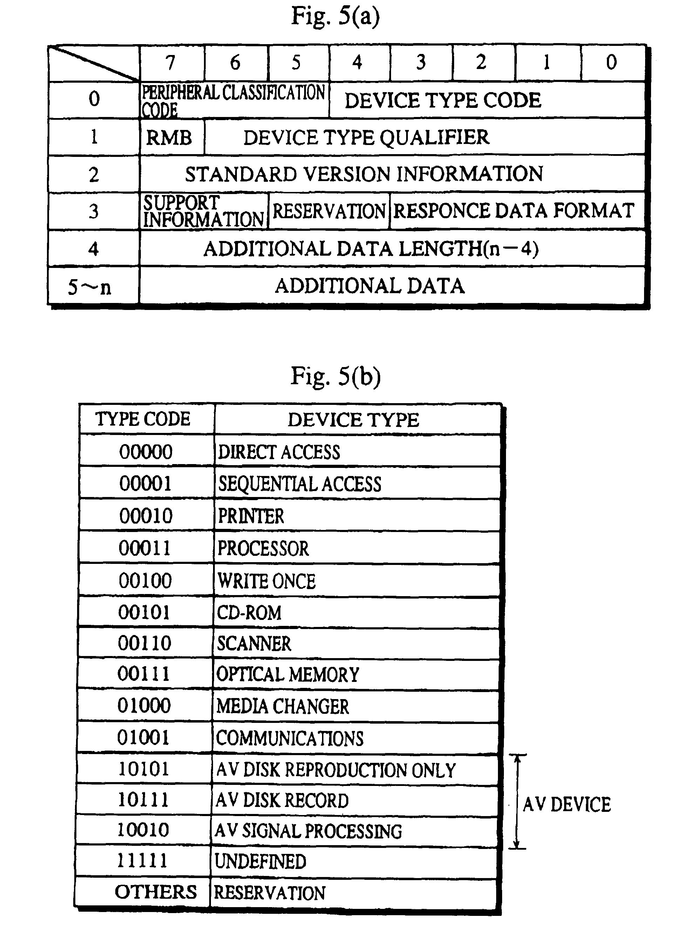

Fig.5(a) shows the format of the device attribute information transferred between SCSI devices;
Fig.5(b) shows the correspondence between the device type codes in the device attribute information and the device types;

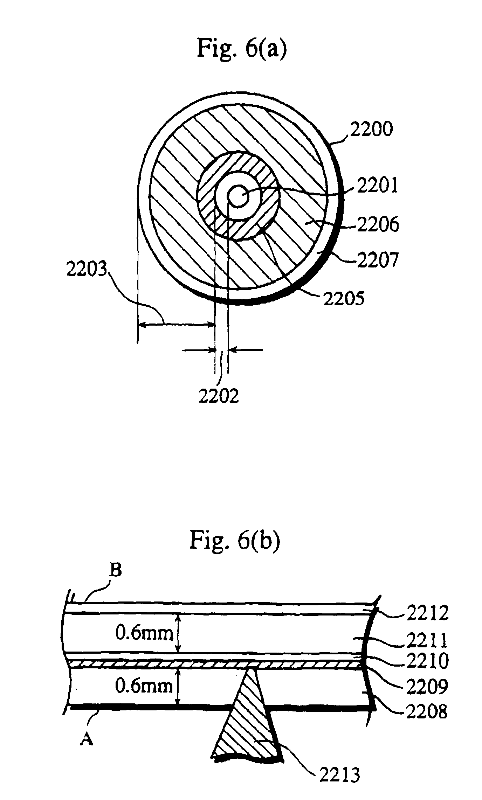

Fig.6(a) is a front view of a DVD;
Fig.6(b) is a cross-section of the DVD;

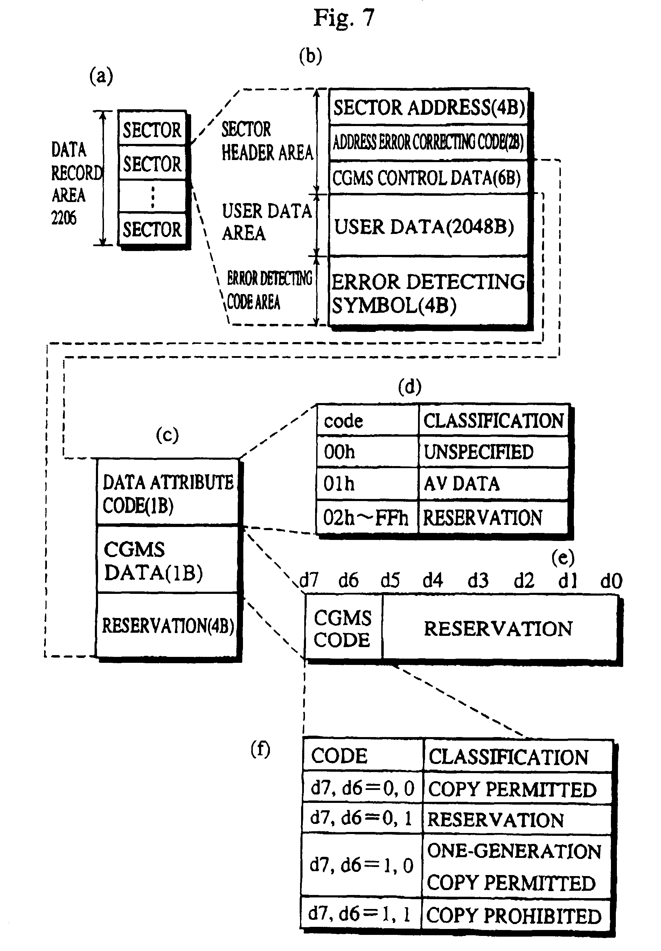

Figs.7(a)-7(f) show the DVD physical format, namely the physical construction of recorded data;
Fig.7(a) shows the physical construction of data-recorded 2206;
Fig.7(b) shows the construction of the sector;
Fig.7(b) shows the construction of the sector;
Fig.7(c) shows the construction of the CGMS control data;
Fig.7(d) shows the classification of the data attribute code;
Fig.7(e) shows the construction of the CGMS data;
Fig.7(f) shows the classification of the CGMS code;

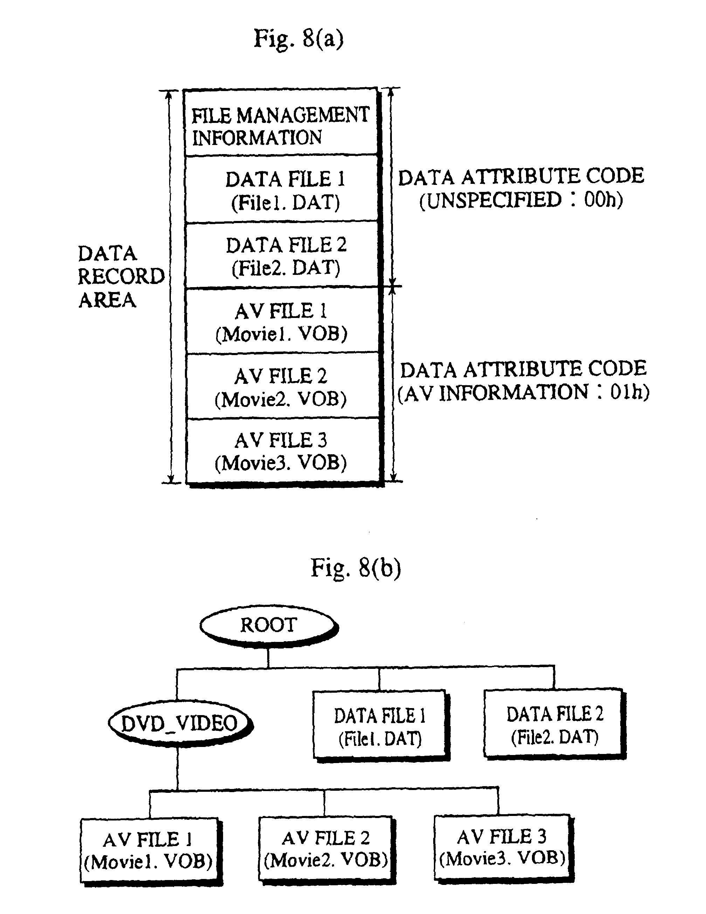

Figs.8(a) and 8(b) show the DVD logical format, namely, the logical construction of recorded data;
Fig.8(a) shows the logical construction of data-recorded 2206;
Fig.8(b) shows a tree of the file/directory construction;

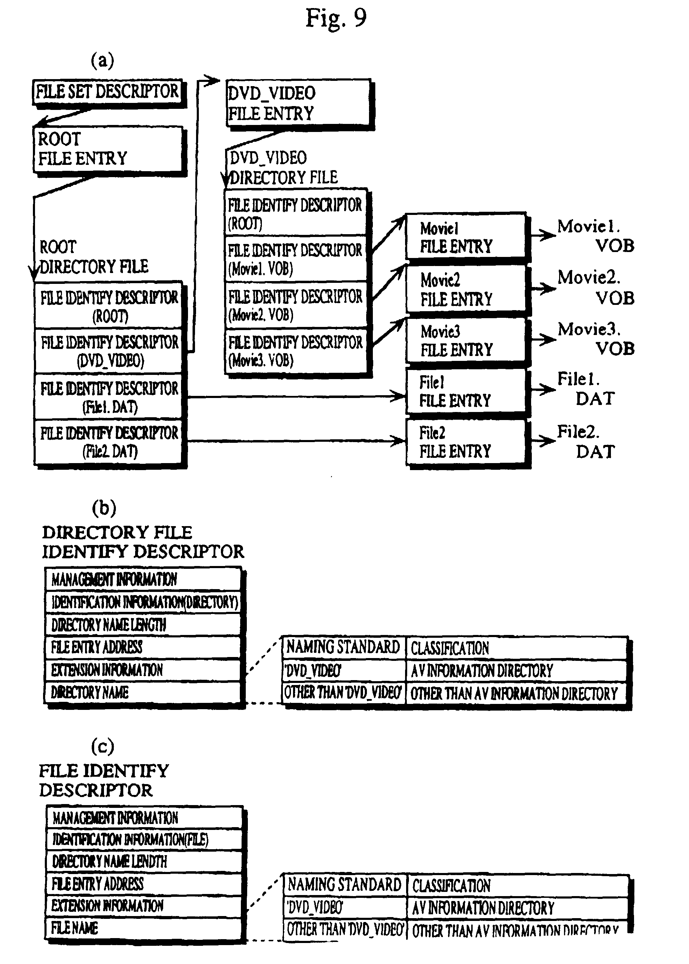

Figs.9(a)-9(c) show the ISO13346 standard which is used as a filing system of the logical format shown in Figs.8(a) and 8(b);
Fig.9(a) shows the logical relation of data in the file management information under the ISO13346 standard;
Fig.9(b) shows the construction of the file identify descriptor for directory;
Fig.9(c) shows the construction of the file identify descriptor for files;

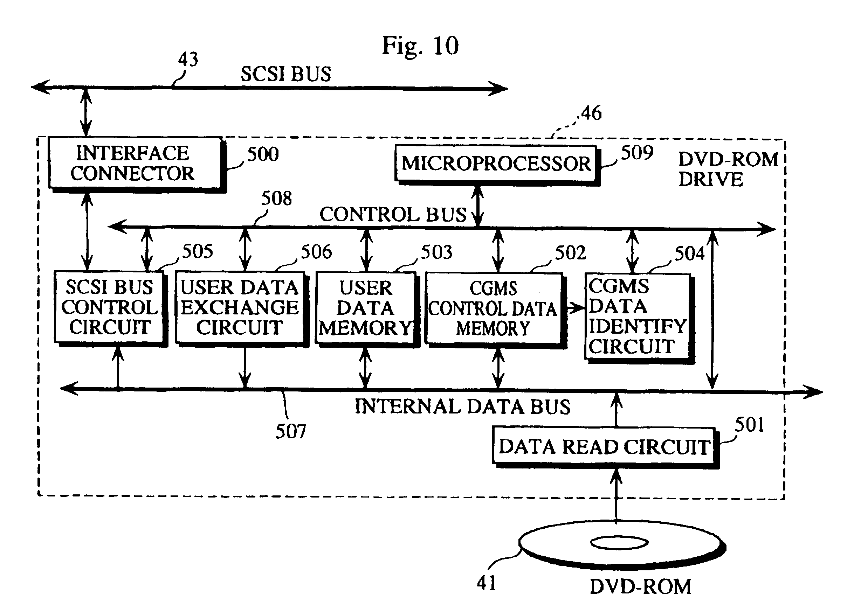

Fig.10 is a block diagram showing the construction of DVD-ROM drive 46.
Fig.ll is a block diagram showing the construction of DVD-RAM drive 910.

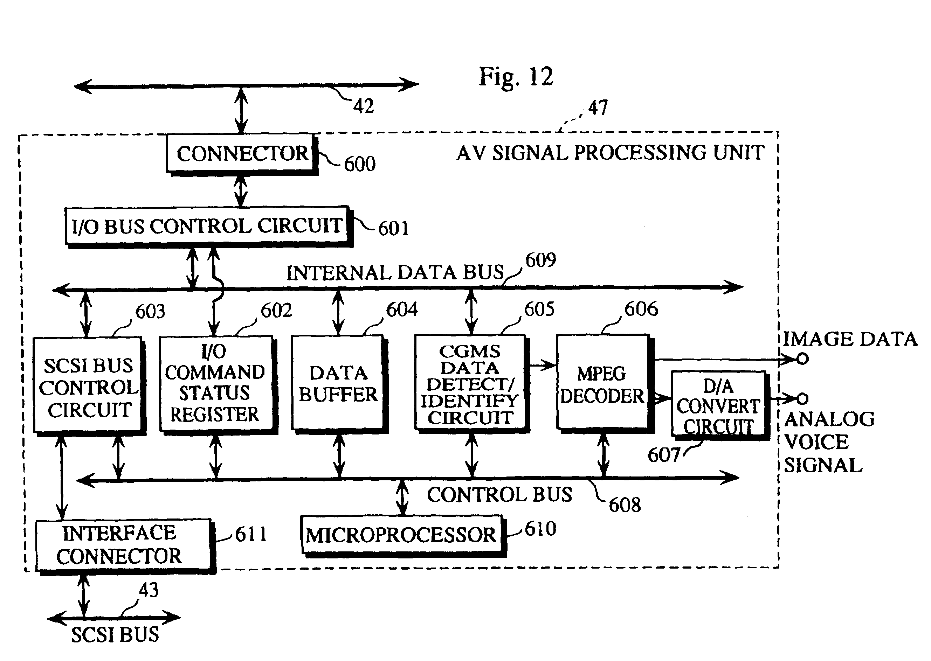

Fig.12 is a block diagram showing the construction of AV signal processing unit 47.

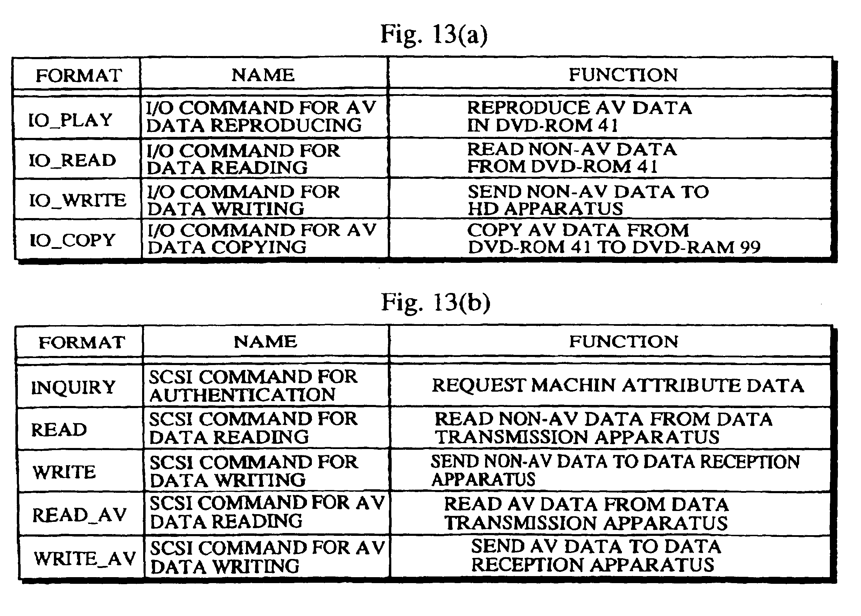

Fig.13(a) is a list of I/O commands;
Fig.13(b) is a list of SCSI commands;

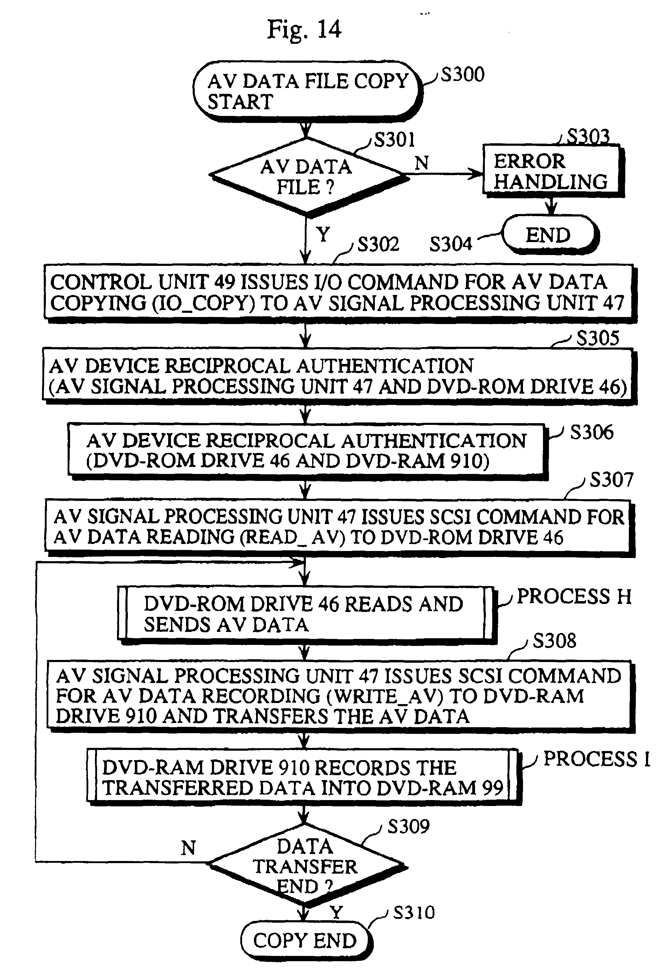

Fig.14 is a flowchart showing the procedure of copying an AV data file from DVD-ROM 41 to DVD-RAM 99;

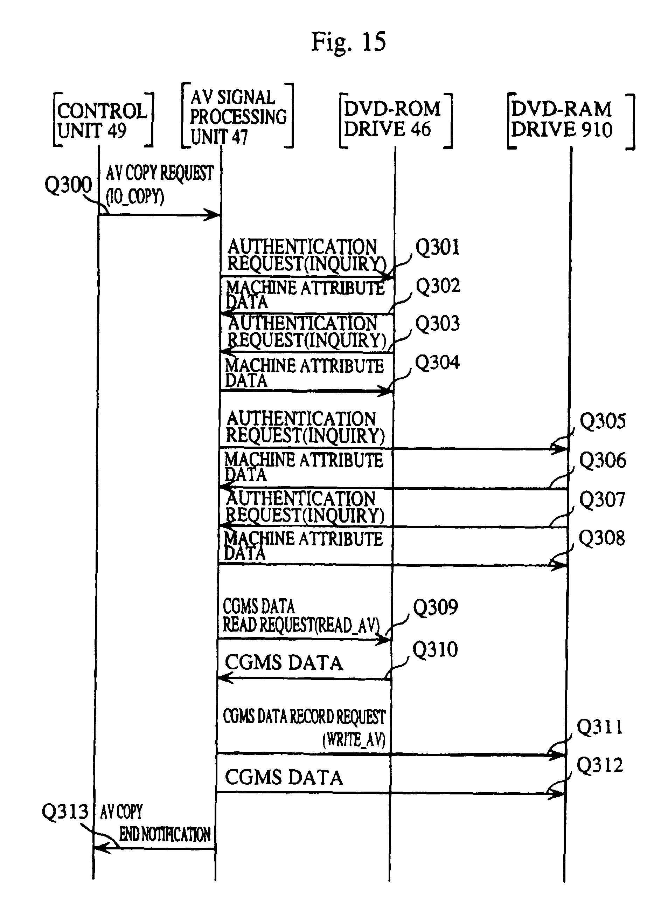

Fig.15 shows a series of communications in the above copying shown in Fig.14;

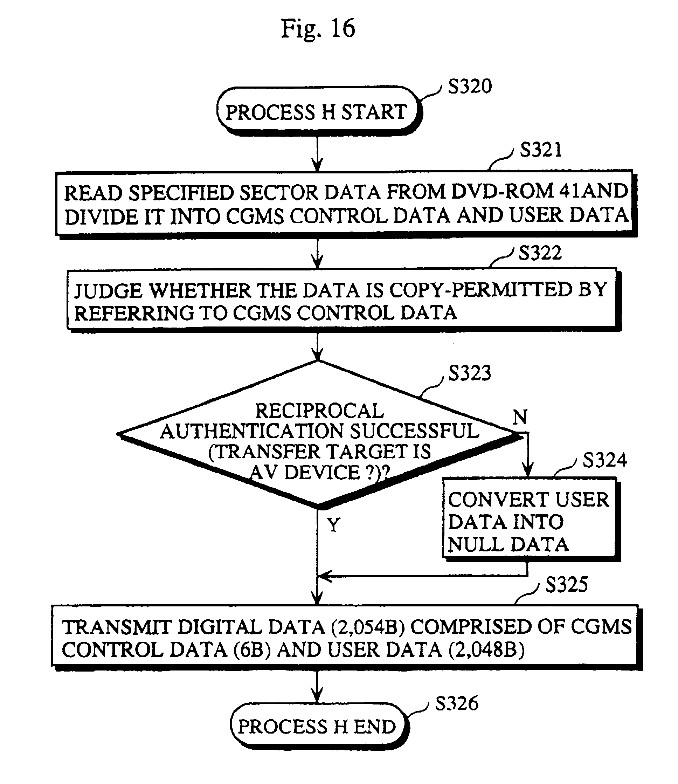

Fig.16 is a flowchart showing the procedure of process H;

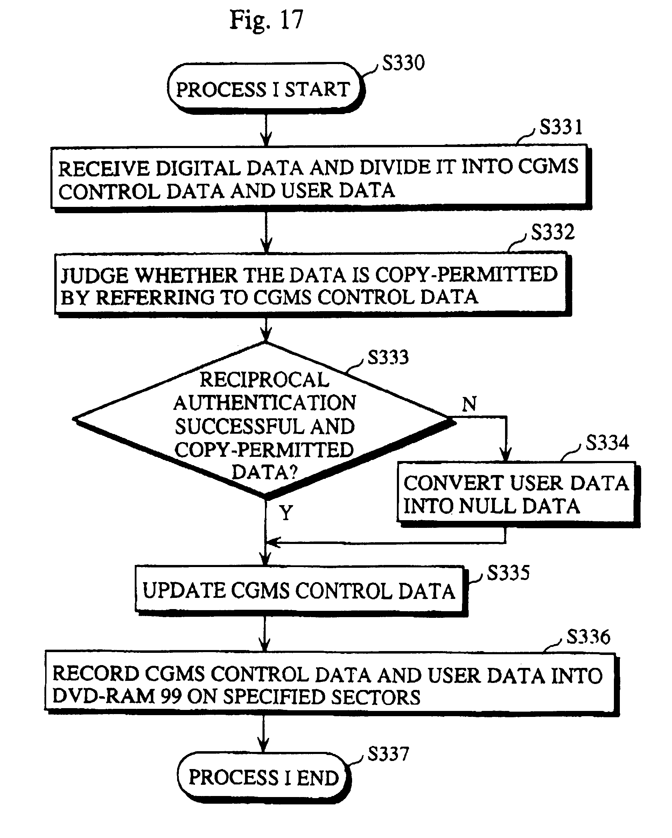

Fig.17 is a flowchart showing the procedure of process I;

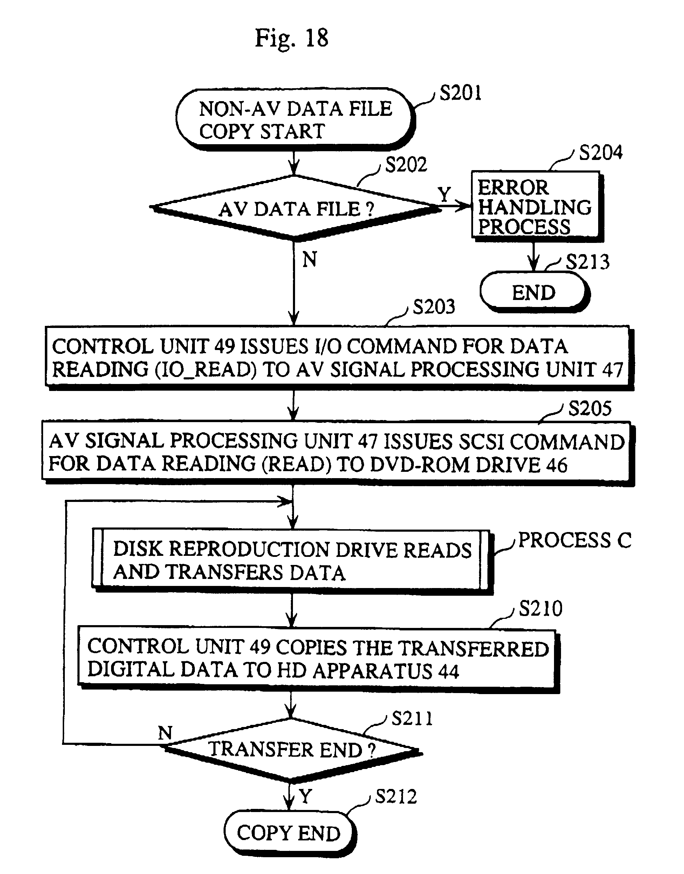

Fig.18 is a flowchart showing the procedure of copying a file from DVD-ROM 41 to HD apparatus 44;

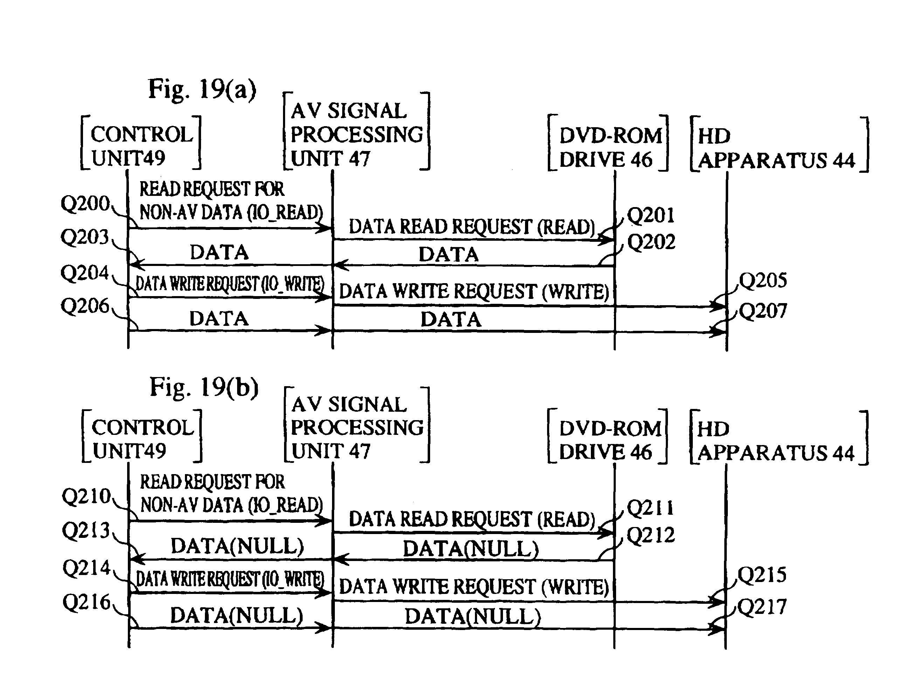

Figs.19(a) and (b) shows a series of communications in the above copying shown in Fig.18;

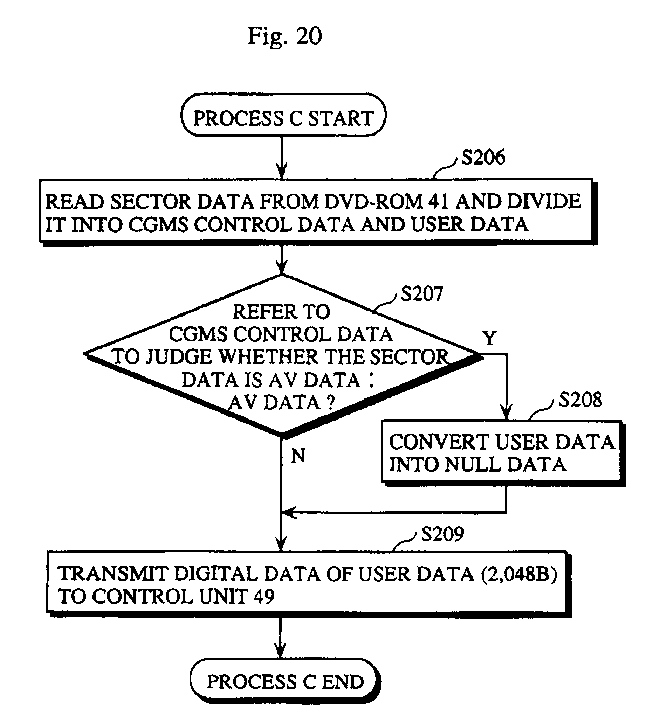

Fig.20 is a flowchart showing the procedure of process C;

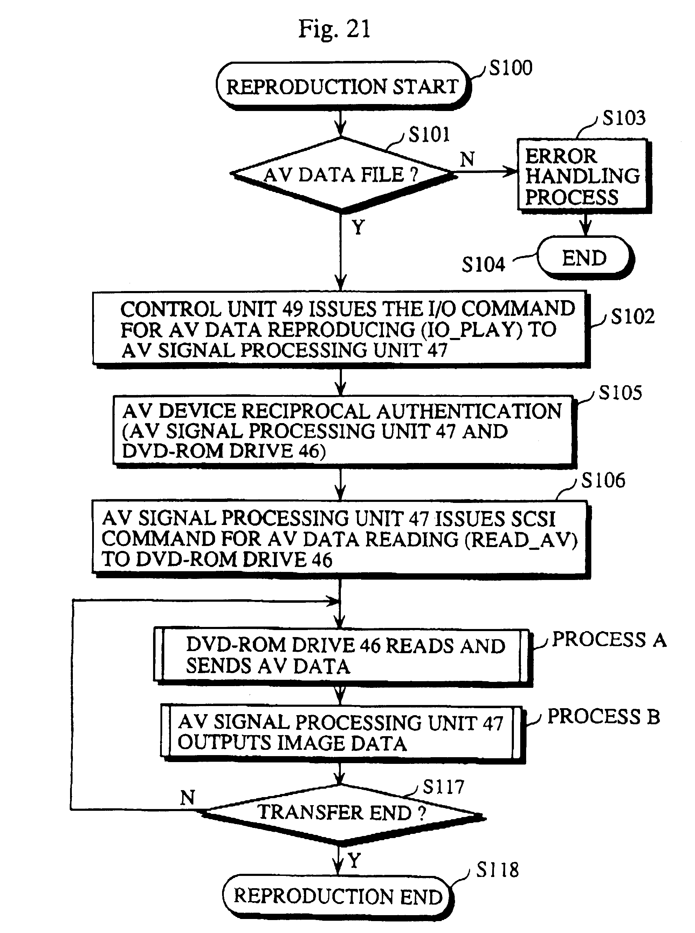

Fig.21 is a flowchart showing the procedure of reproducing an AV data file recorded in DVD-ROM 41;

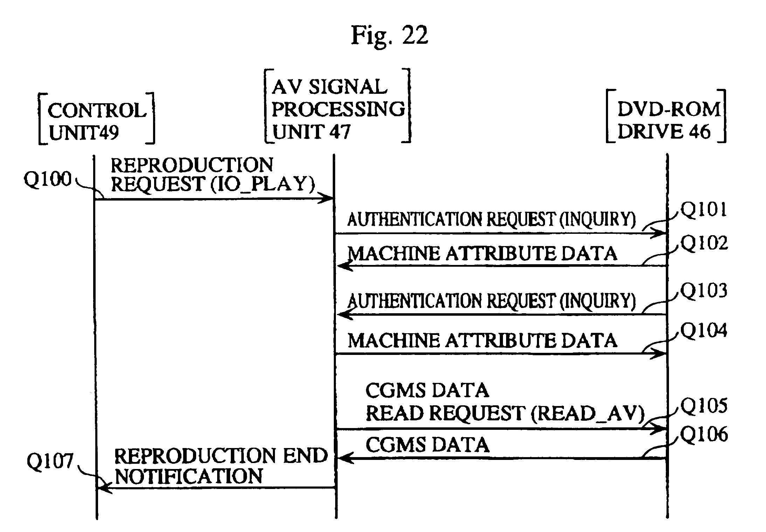

Fig.22 shows a series of communications in the above reproduction shown in Fig.21;

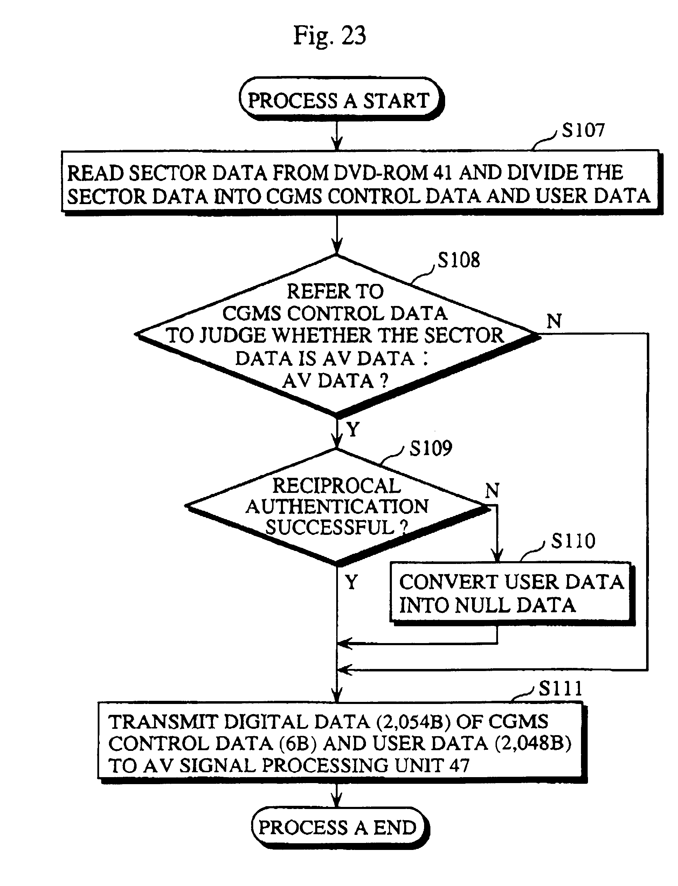

Fig.23 is a flowchart showing the procedure of process A;

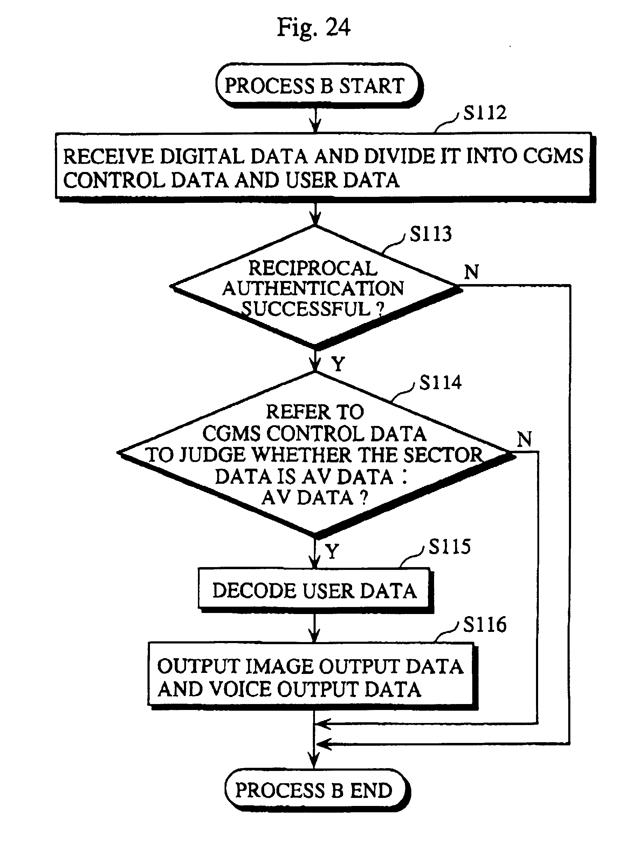

Fig.24 is a flowchart showing the procedure of process B;

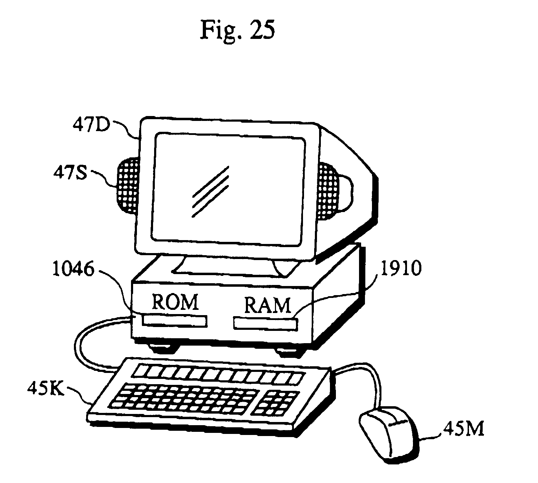

Fig.25 shows an appearance of the information processing systemc of the second embodiment;

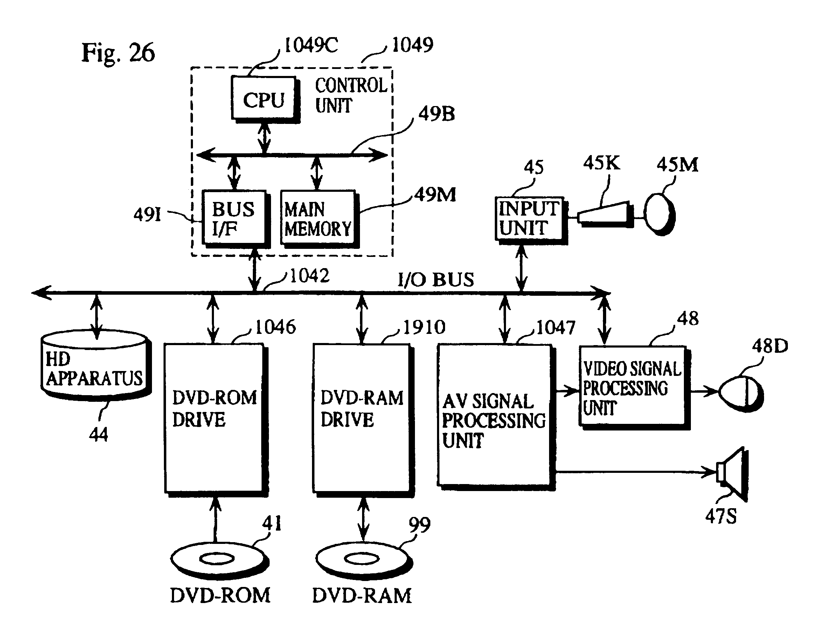

Fig.26 is a block diagram showing the construction of the information processing system of the second embodiment;

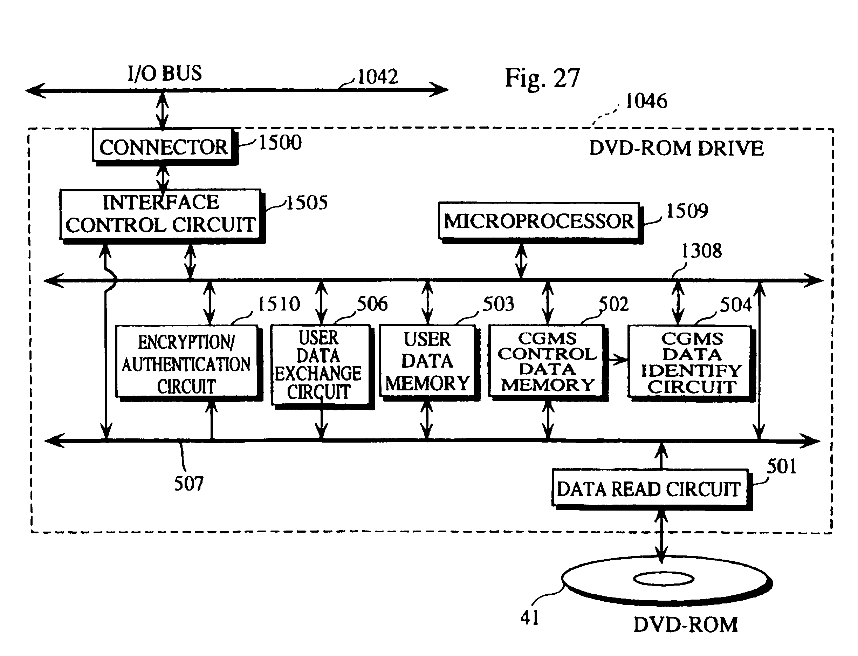

Fig.27 is a block diagram showing the construction of DVD-ROM drive 1046;

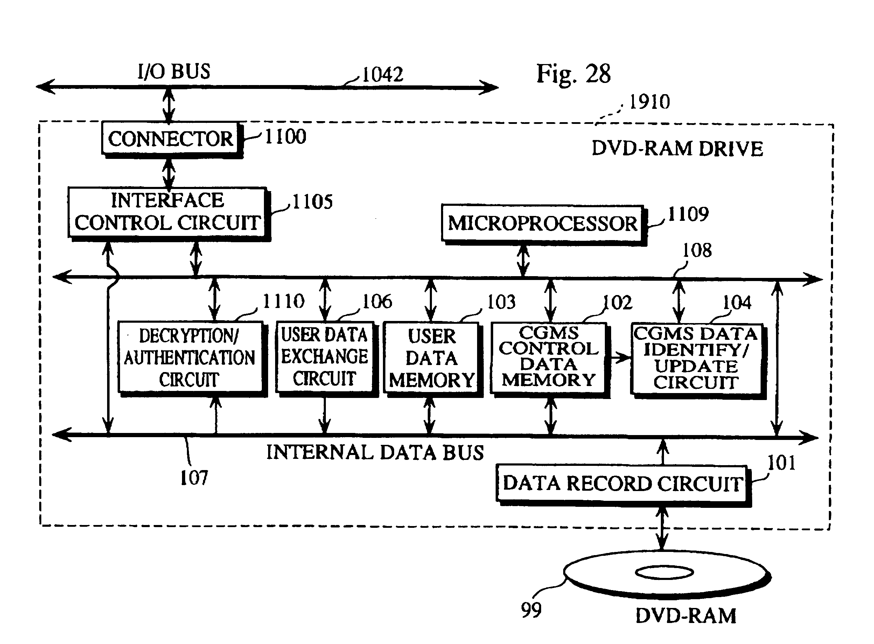

Fig.28 is a block diagram showing the construction of DVD-RAM drive 1910;

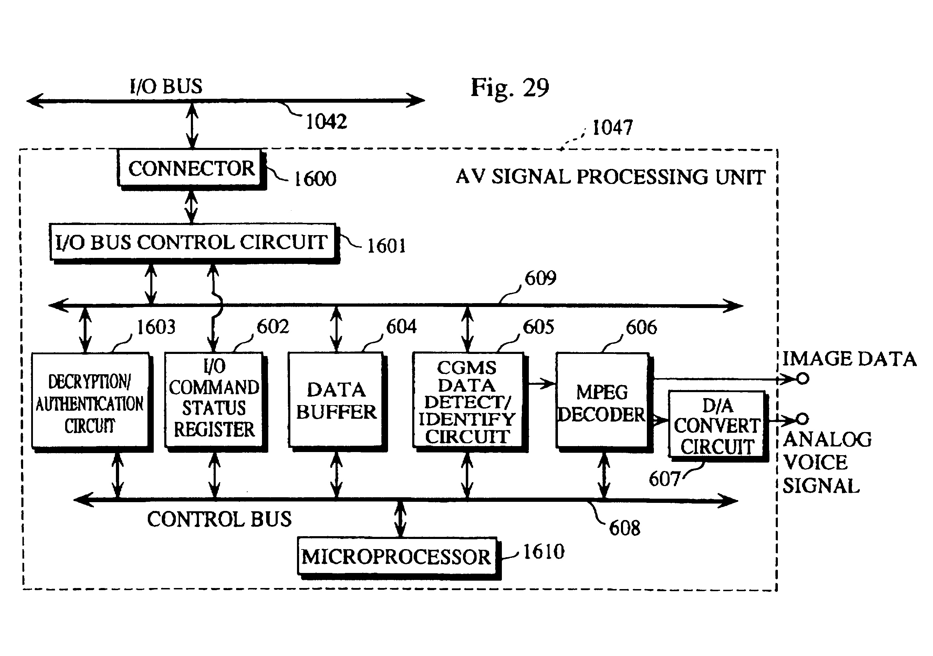

Fig.29 is a block diagram showing the construction of AV signal processing unit 1047;

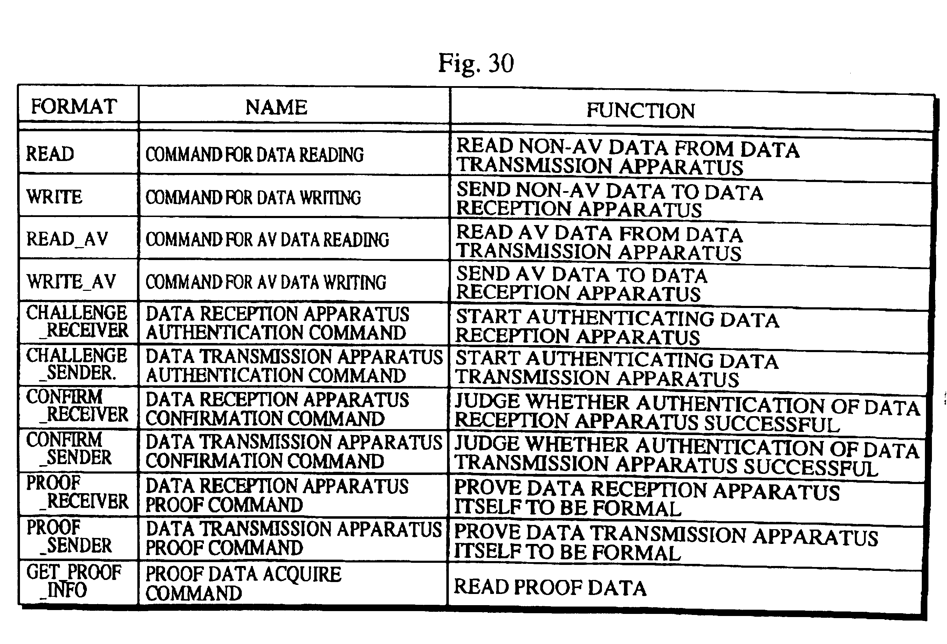

Fig.30 is a list of the commands transferred between each apparatus;

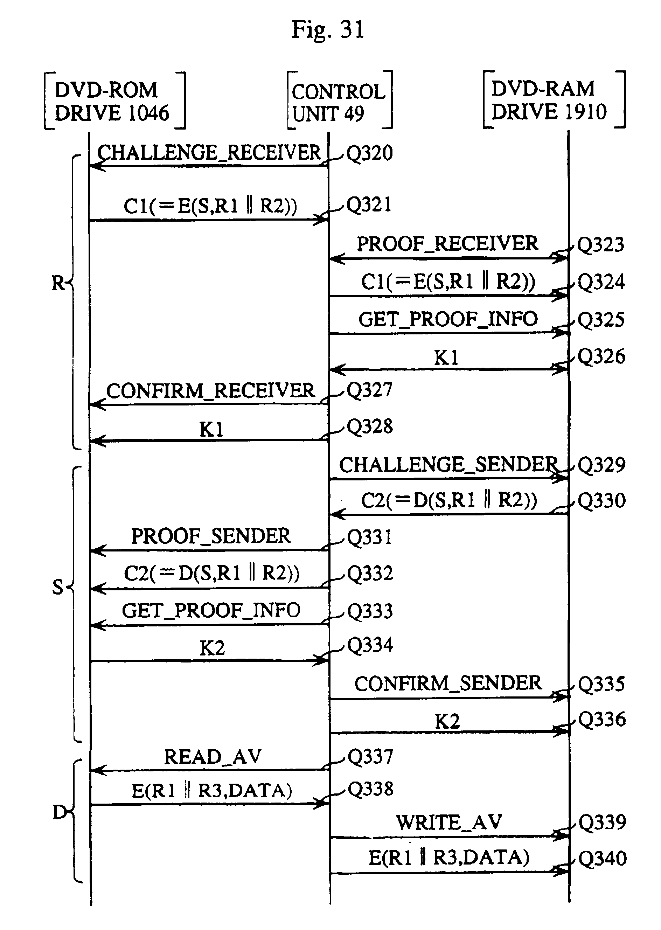

Fig.31 shows a series of communications when an AV data file is copied from DVD-ROM 41 to DVD-RAM 99;

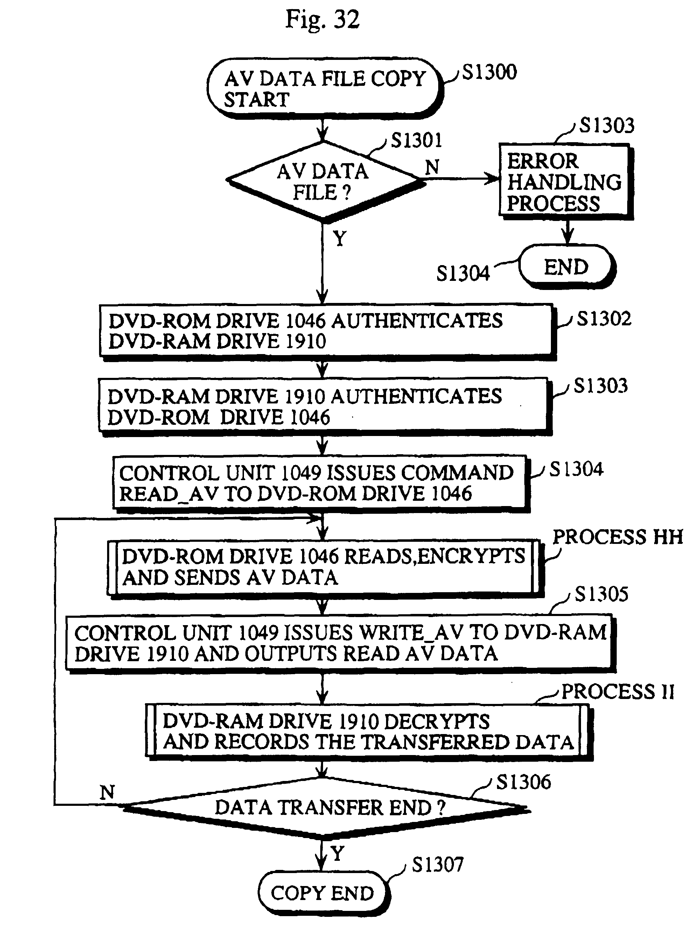

Fig.32 is a flowchart showing the procedure of copying of Fig.31;

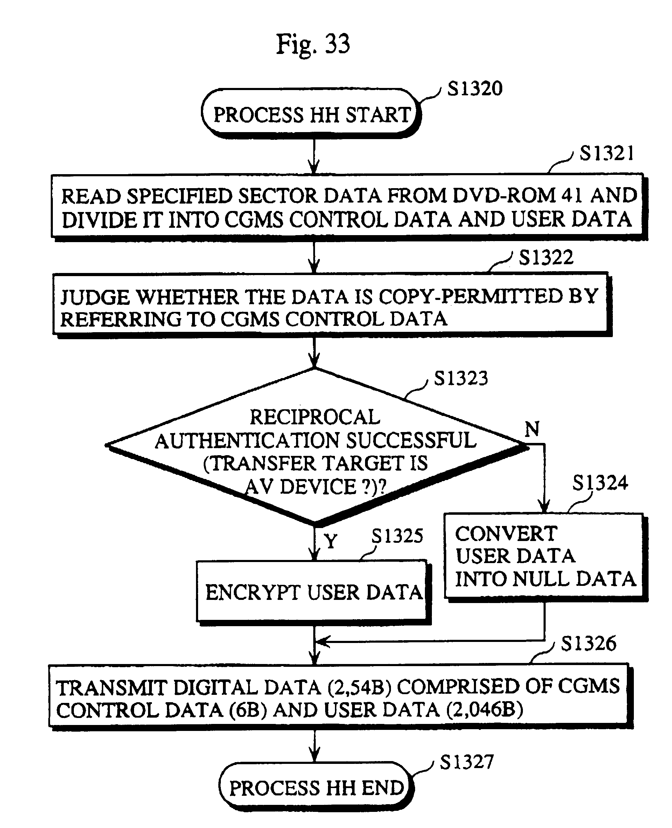

Fig.33 is a flowchart showing the procedure of process HH appearing in Fig.32;

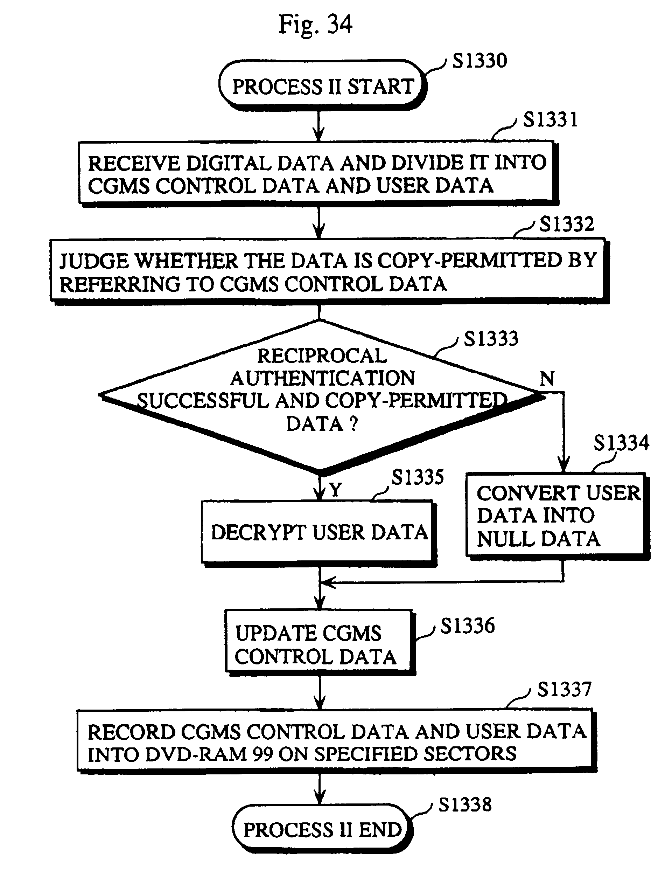

Fig.34 is a flowchart showing the procedure of process II appearing in Fig.32;

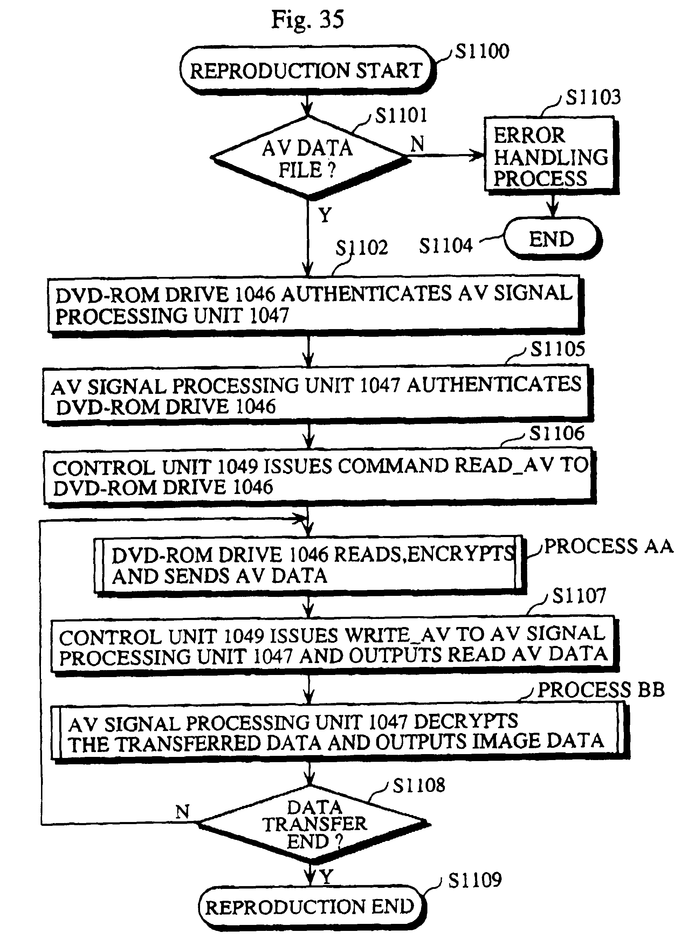

Fig.35 is a flowchart showing the procedure of reproducing an AV data file recorded in DVD-ROM 41;

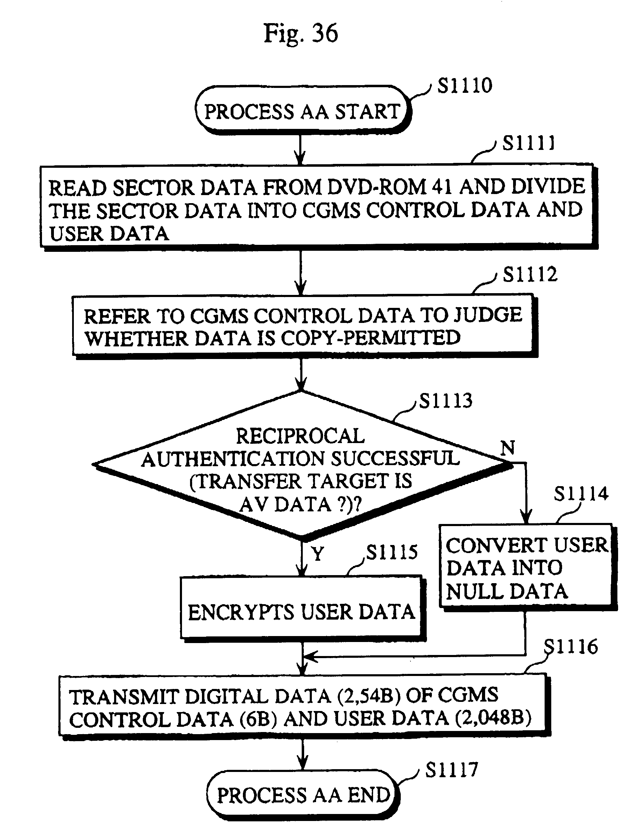

Fig.36 is a flowchart showing the procedure of process AA appearing in Fig.35; and

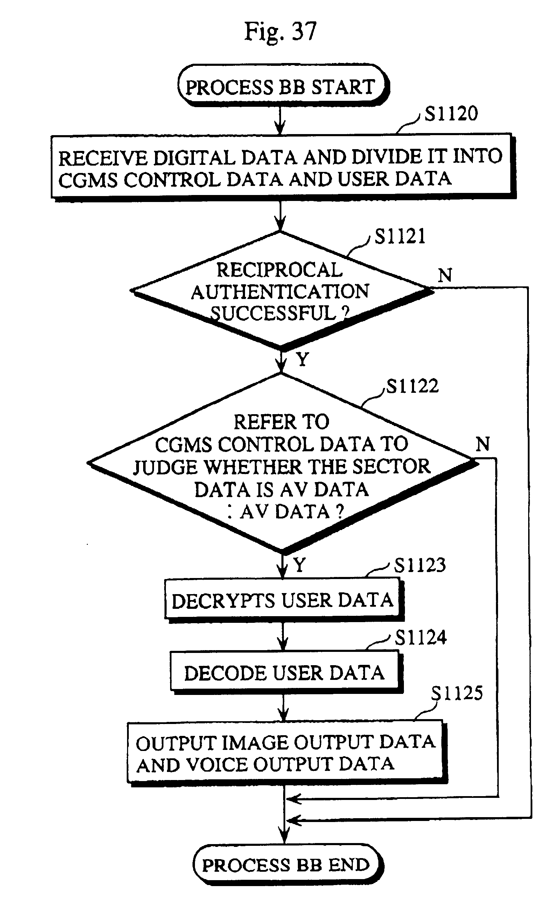

Fig.37 is a flowchart showing the procedure of process BB appearing in Fig.35.

### DESCRIPTION OF THE PREFERRED EMBODIMENTS

The following are descriptions of the preferred embodiments of information processing systems of the present invention with reference to the drawings.

### <<First Embodiment>>

The information processing system of the first embodiment reads digital data recorded in a DVD and processes (reproduces and copies) the read digital data within a range of use form specified by the copyright owner, the system being characterized by an internal bus and an external bus formed therein.

### <Construction of Information Processing System>

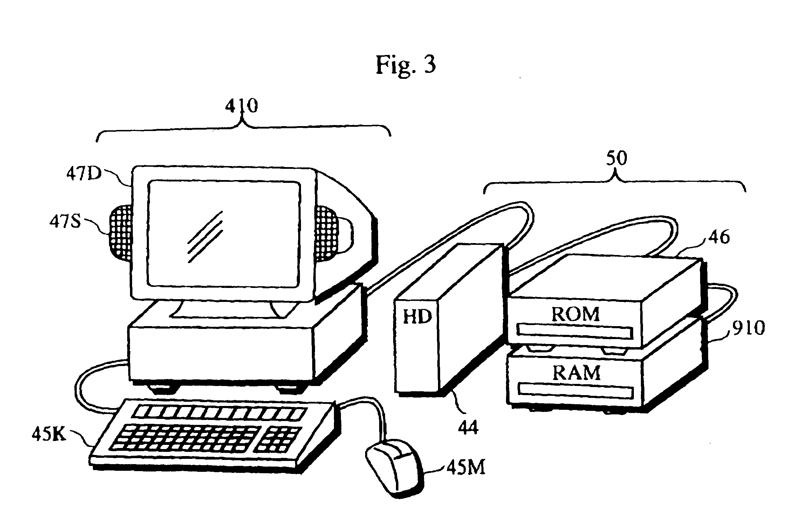

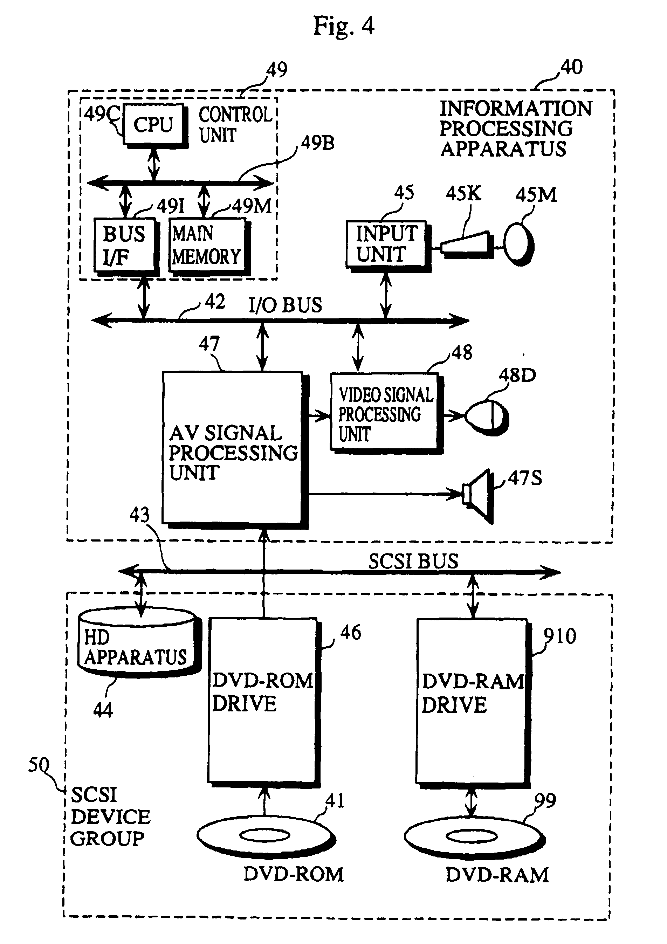

Fig.3 shows an appearance of the information processing system of the first embodiment. Fig.4 is a block diagram showing the construction of the information processing system.

The information processing system is divided into two main elements: information processing apparatus 40; and Small Computer System Interface (SCSI) device group 50 connected to information processing apparatus 40 via SCSI bus 43. Information processing apparatus 40 is comprised of control unit 49, input unit 45, keyboard 45K, mouse 45M, I/O bus 42, AV signal processing unit 47, video signal processing unit 48, display apparatus 48D, and speaker 47S. SCSI device group 50 is comprised of HD apparatus 44, DVD-ROM (Read Only Memory) 41, DVD-ROM drive 46, DVD-RAM (Random Access Memory) 99, and DVD-RAM drive 910.

Control unit 49 controls all the above elements which make up the information processing system, but mainly controls the system in acquiring user instructions and in reproducing and copying digital data recorded in DVD-ROM 41 according to the acquired instruction. Control unit 49 directly controls elements 45, 47, and 48, which are connected to I/O bus 42, via I/O bus 42; indirectly controls elements 44, 46, and 910, which are connected to SCSI bus 43, via AV signal processing unit 47.

Input unit 45 to which mouse 45M and keyboard 45K are connect is an interface for receiving user instructions.

I/O bus 42 is an internal bus of information processing apparatus 40 and connects to control unit 49, input unit 45, AV signal processing unit 47, and video signal processing unit 48. A PCI bus or an ISA bus and the like may be used as I/O bus 42.

AV signal processing unit 47 has two functions; a function as an SCSI interface between control unit 49 and SCSI devices; a function as a formal data reception apparatus for reproducing the AV data received via SCSI bus 43, that is, decompressing the AV data and outputting it to video signal processing unit 48 and speaker 475 as the image data and voice data respectively. Note that the "data reception apparatus" indicates an apparatus for receiving digital data via a transmission path and processing it. Also note that the "formal data reception apparatus" indicates a data reception apparatus that processes the AV data formally, that is, processing the digital data in a range of use forms specified by the copyright owner. For example, the formal data reception apparatus is such a data reception apparatus as only reproduces the AV data on which copy is prohibited and only reproduction is permitted and does not store the data internally as secondary recording.

Video signal processing unit 48 combines the image data output from AV signal processing unit 47 with the graphics data generated according to an instruction from control unit 49, then converts the combined data into an analog image signal and outputs it to display apparatus 48D.

HD apparatus 44 is a secondary storage for non-AV-data. In the present embodiment, HD apparatus 44 is used as a target storage into which the program data recorded in DVD-ROM 41 is copied.

DVD-ROM 41 is a read-only DVD and is an information record medium prestoring the digital data that are to be processed by the information processing system.

DVD-ROM drive 46 is one of formal data transmission apparatuses and reads digital data recorded in DVD-ROM 41 and outputs it to the data reception apparatus via SCSI bus 43. Note that the "data transmission apparatus" indicates an apparatus that fetches digital data from the medium and outputs it to the data reception apparatus via a transmission path, and that the "formal data transmission apparatus" indicates a data transmission apparatus that processes the AV data formally, that is, a data transmission apparatus that outputs the AV data only when the transmission target is a formal data reception apparatus.

DVD-RAM 99 is a rewritable DVD. In the present embodiment, DVD-RAM 99 is used as an information record medium for storing the AV data recorded in DVD-ROM 41 as secondary recording.

DVD-RAM drive 910 is one of formal data reception apparatuses and stores digital data received via SCSI bus 43 into DVD-RAM 99.

SCSI bus 43, connecting to information processing apparatus 40 and SCSI device group 50, is an external bus which conforms to the SCSI standard. In the information processing system, original device type codes are used. The device type codes have been defined under the SCSI standard and are used to judge whether an SCSI device is a formal data transmission apparatus or a formal data reception apparatus. This following is a description of the SCSI standard related to the device type codes.

According to the SCSI standard, an SCSI device connected to a bus has identification (ID) codes which are used in the bus. An SCSI device performs the following pre-processing before sending data or a command: the SCSI device outputs to a bus a bus occupation request which includes its own ID code and transfer target ID code; if the transfer target SCSI device gives a response to the request, the occupation of the bus is established; then the data or command is transmitted. That is, it is possible for SCSI devices connected to an SCSI bus to identify one another at data transmission by means of the ID codes.

In addition, SCSI devices connected an SCSI bus include the device attribute information indicating the type and function of the SCSI devices.

Figs.5(a) and 5(b) show the device attribute information.

Fig.5(a) shows the format of the device attribute information. In the drawing, the higher three bits of the first one byte represent a peripheral device classification code; the lower five bits a device type code.

Fig.5(b) shows the correspondence between the device type codes and the device types. As shown in the drawing, device type code "10101" indicates an "AV disk read-only device," "10111" an "AV disk record device," and "10010" an "AV signal processing device."

Note that in the present embodiment, the "AV disk read-only device (10101)," "AV disk record device (10111)," and "AV signal processing device (10010)" are called "AV devices" in the present specification. The DVD-ROM drive 46 of the present embodiment is the "AV disk read-only device (10101)," AV signal processing unit 47 "AV signal processing device (10010)," and DVD-RAM drive 910 "AV disk record device (10111)," all of them being the AV devices.

An SCSI device connected to an SCSI bus, on receiving an SCSI command for authentication (INQUIRY) from another SCSI device via the SCSI bus, returns the device attribute information to the other via the SCSI bus. The other SCSI device holds the device attribute information with the device ID of the sending device. Accordingly, once an SCSI device acquires the device attribute information by sending the SCSI command (INQUIRY), the SCSI device holds the device type information of the other device.

In the present specification, the operation done by two AV devices, sender and receiver of data, for identifying each other with the SCSI command (INQUIRY) for authentication is called an "AV device reciprocal authentication."

Now, DVD-ROM 41, DVD-RAM 99, DVD-ROM drive 46, DVD-RAM drive 910, AV signal processing unit 47, and control unit 49 are described in detail.

### <DVD-ROM 41, DVD-RAM 99>

The construction of DVD-ROM 41 and DVD-RAM 99 (they each are often called a DVD) and the construction of digital data recorded in them are described as follows.

### <Construction of DVD>

Fig.6(a) is a front view of a DVD.

DVD 2200 has center hole 2201. Around the center hole is clamp area 2202, and further around the clamp area is information record area 2203 in which digital data is recorded.

Information record area is divided into lead-in area 2205, data-recorded 2206, and lead-out area 2207. The lead-in area is located at the innermost position; the lead-out area the outermost position. Lead-in area 2205 stores data which is used to initialize DVD-ROM drive 46 and DVD-RAM drive 910 (they each are often called a DVD drive); data-recorded 2206 stores digital data which is different for each application. Lead-out area 2207 notifies the DVD drive of the end of data-recorded 2206 and does not store substantial data. That is, the DVD drive first reads lead-in area 2205 when the disk is loaded, then reads data-recorded 2206 according to a received instruction.

Fig.6(b) is a cross-section of the DVD.

Starting from the bottom, the information record layer of DVD 2200 is formed of first transparent substrate 2208, information layer 2209, bonding layer 2210, second transparent substrate 2211, and print layer 2212 on which a label is printed. First transparent substrate 2208 and second transparent substrate 2211 are both about 0.6mm thick, that is in a range of about 0.5nm to 0.7mm. Bonding layer 2210, being formed between information layer 109 and transparent substrate 111, bonds these layers. Print layer 2212 may be excluded if not necessary, also it may cover only a part of the information record layer.

The lower surface from which information is read with light beam 2213 shone thereon is called surface A, and the upper surface on which printing layer 2212 is formed is called rear surface B.

For DVD-ROM 41, a reflective membrane such as metal foil is attached to a surface of information layer 2209 where it is in contact with transparent substrate 2208. Indented and protruding pits are formed in this reflective membrane. The pit length and interval determines the content of digital data. The pit length and interval are shorter than those of CDs. Also, the pitch of the information track comprised of a series of pits is shorter than that of CDs. Information is retrieved by shining light beam 2213 on the series of pits and measuring changes in the reflection ratio.

For DVD-RAM 99, in contrast, information is recorded by using the phase change of information layer 2209, which is made of a special record material (a kind of alloy). That is, information is recorded by shining a high-output light beam on light spot 2214 to heat the spot to a high temperature to change the spot from crystal state to amorphous state. Information is retrieved by shining a low-output light beam and reading changes in the reflection ratio of the crystal phase and amorphous phase.

Light spot 2214 on a DVD has a diameter of around 1/1.6 times the diameter of a light spot on a conventional CD due to an increase in the Numerical Aperture (NA) of the objective lens and a reduction in the wavelength λ of the light beam.

DVDs of the physical construction described above can store about 4.7GB of information with DVD-ROM 41, about 2.6GB with DVD-RAM 99. The storage capacity of 4.7GB is almost eight times the storage capacity of a conventional CD. As a result, it is possible to achieve a great improvement in picture quality for moving pictures and to increase the reproduction time to over two hours. Due to such a storage capacity, it may be said that DVDs are suitable for record media for storing high-quality pictures.

### <DVD Physical Format>

Figs.7(a)-7(f) show the DVD physical format, namely the physical construction of recorded data.

Fig.7(a) shows the physical construction of data-recorded 2206, which is divided into a plurality of sectors. The sector is the minimum unit of data in reading/writing.

Fig.7(b) shows the construction of the sector. Each sector includes, in order, a sector header area of 12 bytes, a user data area of 2,048 bytes, and an error detecting code area of 4 bytes.

The user data area stores digital data of the file management information or the application information that includes the AV data. The AV data included in the application information is MPEG streams. The file management information is management information of the filing system in which files are managed with such a construction as a plurality of sectors make up a file, a plurality of files a directory.

The sector header area stores, in order, a sector address, which is address information for identifying sectors, an error correcting code of the sector address, and a Copy Generation Management System (CGMS) control data. The CGMS control data specifies a use format of digital data stored in the sector. The DVD drive controls reading of a sector according to the CGMS control data.

Note that the address information of the sector includes information specifying any of the lead-in area 2205, data-recorded 2206, and lead-out area 2207. The DVD drive identifies one of the areas according to the address information of the sector.

Fig.7(c) shows the construction of the CGMS control data. The CGMS control data is comprised of a data attribute code of 6 bytes, CGMS data of 1 byte, and 4 bytes reserved.

Fig.7(d) shows the classification of the data attribute code. Data attribute code "01h" (h indicates hexadecimal notation) indicates that the AV data is recorded in the user data area of the sector; "00h" indicates that a data attribute is not specified.

Fig.7(e) shows the construction of the CGMS data. The CGMS data has 1 byte, of which higher 2 bits are called a CGMS code. The CGMS code specifies a use form of the digital data stored in the user data area of the sector.

Fig.7(f) shows the classification of the CGMS code. CGMS code "00" indicates a copy permitted, "10" a one-generation copy permitted, and "11" a copy prohibited. Note that the "one-generation copy permitted" indicates such a copy permission as, for example, copying the AV data from DVD-ROM 41 to DVD-RAM 99 is permitted, but further copying the copied AV data to another DVD-RAM is not permitted. Also note that in the present embodiment, the reproduction is permitted with any of the above CGMS codes.

With the sector construction described above, when reading a piece of digital data from the user data area of a sector, the DVD drive judges whether the piece of digital data is AV data and identifies the manner of copy permission by referring to the CGMS control data of the sector.

### <DVD Logical Format>

Figs.8(a) and 8(b) show the DVD logical format, namely, the logical construction of recorded data.

Fig.8(a) shows the logical construction of data-recorded 2206. At the first place of data-recorded 2206 is the file management information, then follow a plurality of files. The "file" indicates a logical data unit which includes a plurality of sectors and is used to manage the sectors in groups. The file management information includes the attribute of each file. The file management information may also include information used to manage files in units of directories.

Fig.8(b) shows a tree of the file/directory construction in the present embodiment. The ovals in the drawing indicate directories, the rectangles files. In this example, the DVD VIDEO directory and two files, namely, File1.DAT and File2.DAT are linked to the ROOT directory, and three files, namely, Movie1.VOB, Movie2.VOB, and Movie3.VOB are linked to the DVD VIDEO directory.

Concerning the file name and directory name, a naming standard is prepared in the present embodiment so that the file type may be identified easily. File names with extension VOB are regarded as AV data files. A directory named DVD_VIDEO is a specific directory used for storing AV data, and the files linked to the specific directory are all treated as files that store AV data. In Fig.8(b), the files storing AV data are Movie1.VOB, Movie2.VOB, and Movie3.VOB (hereinafter such files as store AV data are called "AV data files"). File1.DAT and File2.DAT store data which is not AV data (hereinafter files storing data which is not AV data are called "non-AV data files").

With the standard described above, it is possible to judge whether AV data is to be read or non-AV data is by interpreting the name of the file or directory which is to be read. For example, if a path of a file to be read includes a directory DVD_VIDEO, it is judged that an AV data file is to be read. Note that the file management information in the present embodiment conforms to the ISO13346 standard.

Figs.9(a)-9(c) show the ISO13346 standard which is used as a filing system of the logical format shown in Figs.8(a) and 8(b). The following is a description, with reference to the drawings, of a procedure of obtaining a file record address from a file name.

Fig.9(a) shows the logical relation of data in the file management information under the ISO13346 standard.

According to the ISO13346 standard, the file record address is stored in the file entry since the standard deals with rewritable disks as well as read-only disks.

For example, for Movie1.VOB, a file entry for Movie1 exists in the file management information; for File1.DAT, a file entry for File1 exists in the file management information. Accordingly, to obtain the file record address, the target file entry should be obtained. The file entries are obtained by trailing the directories in the file tree construction. The directory information exists as a directory file in the file management information. The directory file is comprised of a plurality of file identify descriptors. Each file identify descriptor includes a file name and a record address of a file entry of a file or a directory managed by a directory. The file entry of the root, which is at the top of the directory tree construction, is included in the file set descriptor which is stored in a predetermined place in the file management information. Accordingly, it is possible to obtain a target address information from a file entry by obtaining the file entry by trailing the directory tree construction with a file name starting from the root.

Fig.9(b) shows the construction of the file identify descriptor for directory. As shown in the drawing, the naming standard described earlier is applied to the directory name in the file identify descriptor.

Fig.9(c) shows the construction of the file identify descriptor for files. As shown in the drawing, the naming standard described earlier is applied to the file name in the file identify descriptor.

### <DVD-ROM drive 46>

Fig.10 is a block diagram showing the construction of DVD-ROM drive 46.

DVD-ROM drive 46 includes interface connector 500, data read circuit 501, CGMS control data memory 502, user data memory 503, CGMS data identify circuit 504, SCSI bus control circuit 505, user data exchange circuit 506, internal data bus 507, control bus 508, and microprocessor 509.

Interface connector 500 connects SCSI bus 43 to DVD-ROM drive 46.

Data read circuit 501, on receiving a piece of address information specifying a sector number, controls a disk drive apparatus, reads digital data stored in the specified sector on DVD-ROM 41, stores the user data of the user data area of the sector into user data memory 503, and stores the CGMS control data of the sector header area of the sector into CGMS control data memory 502.

CGMS control data memory 502 is a memory for temporarily storing the CGMS control data of the sector.

User data memory 503 is a memory for temporarily storing the user data of the sector.

CGMS data identify circuit 504 identifies the content of the CGMS control data. More specifically, CGMS data identify circuit 504 reads CGMS control data from CGMS control data memory 502, judges whether the user data attribute stored in user data memory 503 is "not specified" of "AV data" by referring to the data attribute code of the CGMS control data, and notifies microprocessor 509 of the judgement result. CGMS data identify circuit 504 also judges whether the user data copy limitation information stored in user data memory 503 is "copy permitted," "one-generation copy permitted," or "copy prohibited" by referring to the CGMS data of the CGMS control data, and notifies microprocessor 509 of the judgement result.

SCSI bus control circuit 505, which operates as a controller of the SCSI bus, is connected to SCSI bus 43 via interface connector 500 and transmits/receives commands or data according to the SCSI standard.

User data exchange circuit 506 is one of the circuits formed to protect the copyright. User data exchange circuit 506, on receiving an instruction from microprocessor 509, reads the user data from user data memory 503 and converts it into the NULL data, where the "NULL data" indicates dummy data that does not include information such as "0000h."

Internal data bus 507 is a data transfer path through which data read by data read circuit 501 is transferred and SCSI bus control circuit 505 outputs data to SCSI bus 43.

Control bus 508 is a data transfer path through which instructions, namely, a command set, output from microprocessor 509 are transferred and the process result information sent from each circuit is transferred.

Microprocessor 509 interprets the SCSI command received by SCSI bus control circuit 505 according to an embedded control program and controls the whole DVD-ROM drive 46.

The following is a description of the control by microprocessor 509 for each of the following SCSI commands: INQUIRY for recognizing the device type of the device from/to which data is received/transmitted and for performing the reciprocal authentication; READ for reading general digital data from the DVD; and READ AV for reading only AV data among digital data.

### <INQUIRY: SCSI Command for Authentication>

Microprocessor 509, on judging that an input SCSI command is INQUIRY for authentication, returns the machine attribute data of DVD-ROM drive 46 itself to the device which has sent the SCSI command INQUIRY with the format shown in Fig.5(a) via SCSI bus control circuit 505. Note that the machine attribute data returned includes device type code "10101" (AV disk read-only device), as shown in Fig.5(b).

### <READ: SCSI Command for Data Reading>

Microprocessor 509, on judging that an input SCSI command is READ for data reading, drives and instructs data read circuit 501 to read digital data from DVD-ROM 41 according to the sector number which is included in the command as a parameter. The digital data read by data read circuit 501 is divided into the CGMS control data, which is retrieved from the header area of the sector, and the user data, which is retrieved from the user data area of the sector, then these pieces of data are respectively stored in CGMS control data memory 502 and user data memory 503.

After the above process, CGMS data identify circuit 504 judges whether the user data (2,048 bytes) stored in user data memory 503 is AV data.

If the user data is AV data, user data exchange circuit 506 converts the user data (2,048 bytes) into NULL data (2,048 bytes) as a copyright protection process. SCSI bus control circuit 505 transfers the converted user data to the SCSI device that has sent the command.

If the user data is non-AV data, the user data is transferred to the SCSI device that has sent the command, without above conversion into NULL data.

### <READ_AV: SCSI Command for AV Data Reading>

Microprocessor 509, on judging that an input SCSI command is READ_AV for AV data reading, similarly, drives and instructs data read circuit 501 to read digital data from DVD-ROM 41 according to the sector number which is included in the command as a parameter. The digital data read by data read circuit 501 is divided into the CGMS control data, which is retrieved from the header area of the sector, and the user data, which is retrieved from the user data area of the sector, then these pieces of data are respectively stored in CGMS control data memory 502 and user data memory 503.

After the above process, microprocessor 509 instructs CGMS data identify circuit 504 to judge whether the user data (2,048 bytes) stored in user data memory 503 is AV data and whether the copy limitation information is "copy permitted," "one-generation copy permitted," or "copy prohibited."

Microprocessor 509 then refers to the machine attribute data, which is sent with command READ_AV, of the SCSI device that is the data transfer target to judge whether the data transfer target is an AV device. If it is, microprocessor 509 judges whether the above user data is reproduced or copied. More specifically, when the device type code of the transfer-target SCSI device is any of "10101," "10111," and "10010," it is judged that the transfer target is an AV device; when "10010," judged that the data is reproduced; and when "10111," judged that the data is copied.

If the above judgement matches any of the following, microprocessor 509 outputs the CGMS control data (6 bytes per sector) retrieved from CGMS control data memory 502 and the user data (2,048 bytes per sector) retrieved from user data memory 503, that is, 2,054 bytes of digital data in total in a data transfer unit of 2,054 to the SCSI device that has sent the command:
(1) the user data (2,048 bytes) is non-AV data;
(2) the user data (2,048 bytes) is AV data and the AV data is reproduced; and
(3) the user data (2,048 bytes) is AV data and the AV data is copied and the above copy limitation information is "copy permitted" or "one-generation copy permitted."

If, in contrast, the above judgement matches any of the following, microprocessor 509 instructs user data exchange circuit 506 to convert the user data (2,048 bytes per sector) into NULL data (2,048 bytes) as a copyright protection process, then outputs the NULL data and the CGMS control data (6 bytes per sector) retrieved from CGMS control data memory 502, that is, 2,054 bytes of digital data in total in a data transfer unit of 2,054 to the SCSI device that has sent the command: (1) the user data is AV data and the device to which the user data is transmitted is a non-AV data device; and (2) the user data is AV data and the AV data is copied and the above copy limitation information is "copy prohibited."

### <DVD-RAM drive 910>

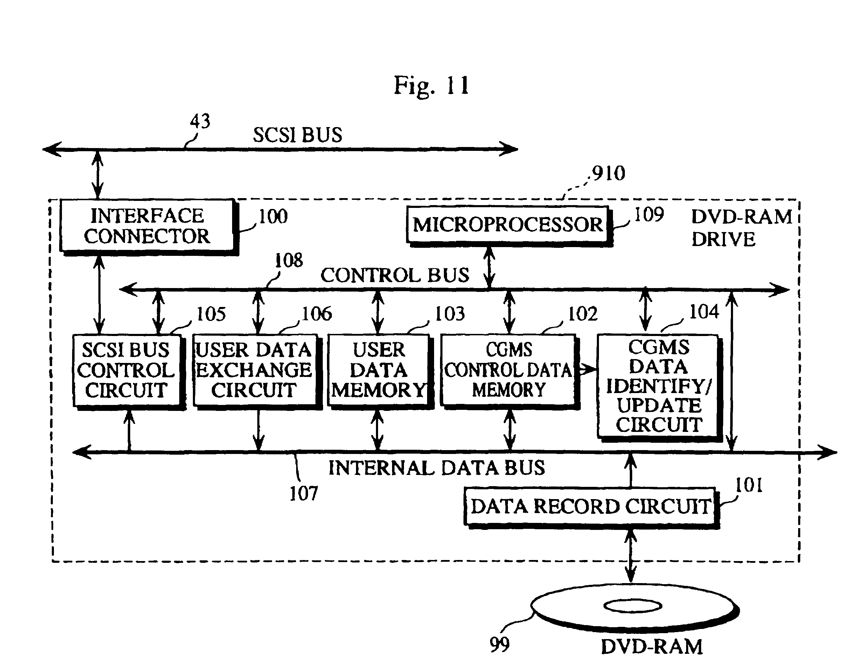

Fig.11 is a block diagram showing the construction of DVD-RAM drive 910.

DVD-RAM drive 910 includes interface connector 100, data record circuit 101, CGMS control data memory 102, user data memory 103, CGMS data identify/update circuit 104, SCSI bus control circuit 105, user data exchange circuit 106, internal data bus 107, control bus 108, and microprocessor 109.

Among the above elements, interface connector 100, CGMS control data memory 102, user data memory 103, SCSI bus control circuit 105, user data exchange circuit 106, internal data bus 107, and control bus 108 operate the same as corresponding elements of DVD-ROM drive 46. As a result, repetitious description is omitted, and only microprocessor 109, which functions differently from microprocessor 509 and new elements data record circuit 101 and CGMS data identify/update circuit 104 are explained here.

Note that the correspondence between the elements of DVD-ROM drive 46 and those of DVD-RAM drive 910 are as follows: interface connector 100 and interface connector 500; CGMS control data memory 102 and CGMS control data memory 502; user data memory 103 and user data memory 503; SCSI bus control circuit 105 and SCSI bus control circuit 505; user data exchange circuit 106 and user data exchange circuit 506; internal data bus 107 and internal data bus 507; and control bus 108 and control bus 508.

Data record circuit 101 writes into DVD-RAM 99 the data retrieved from data memory 503 or CGMS control data memory 502. In writing as above, the CGMS control data and the user data are recorded in the sector header area and the user data area of the specified sector with the formats shown in Figs.7(a)-7(f).

CGMS data identify/update circuit 104 identifies or updates the content of the CGMS control data. More specifically, CGMS data identify/update circuit 504 reads CGMS control data from CGMS control data memory 102 according to an instruction from microprocessor 109, identifies the data attribute code and the CGMS code therein, and sends the results to microprocessor 109. CGMS data identify/update circuit 504 also updates the CGMS data in the CGMS control data retrieved from CGMS control data memory 102 according to an instruction from microprocessor 109. In the update, if the CGMS code is "10" (one-generation copy permitted), CGMS data identify/update circuit 504 updates the code as "11" (copy prohibited) to prohibit the copy of the second generation.

Microprocessor 109 interprets the SCSI command received by SCSI bus control circuit 105 according to the embedded control program, and controls the whole DVD-RAM drive 910.

Now, the operations of DVD-RAM drive 910 for SCSI commands INQUIRY and WRITE_AV are described.

### <INQUIRY: SCSI Command for Authentication>

Microprocessor 109, on judging that an SCSI command input to SCSI bus control circuit 105 is INQUIRY used for authentication, returns the machine attribute data of DVD-RAM drive 910 to the device which has sent the SCSI command INQUIRY with the format shown in Fig.5(a) via SCSI bus control circuit 105. Note that the machine attribute data returned includes device type code "10111" (AV disk record device), as shown in Fig.5(b).

Microprocessor 109 sends SCSI command INQUIRY for authentication to the SCSI device connected to the SCSI bus, receives the machine attribute data of the SCSI device from the device, and stores the attribute data in the internal memory and the like with the corresponding ID code of the SCSI device.

### <WRITE_AV: SCSI Command for AV Data Recording>

Microprocessor 109, on judging that an input SCSI command is WRITE_AV for AV data recording, instructs SCSI bus control circuit 105 to receive digital data in a transfer unit of 2,054 bytes and stores the user data of the digital data into user data memory 103, the CGMS control data into CGMS control data memory 102.

CGMS data identify/update circuit 104 judges whether the user data stored in user data memory 103 is the copy-permitted data. More specifically, if the CGMS code of the CGMS data is "10" (one-generation copy) or "00" (copy permitted), CGMS data identify/update circuit 104 judges that the copy of the data is permitted. Microprocessor 109 also judges whether the SCSI device that has sent the command WRITE_AV is an AV device by referring to the machine attribute data obtained through the reciprocal authentication done earlier.

If the SCSI device is an AV device and the user data is copy-permitted digital data, CGMS data identify/update circuit 104 updates the CGMS control data. Data record circuit 101 then records the user data (2,048 bytes) and the updated CGMS control data (6 bytes) into DVD-RAM 99.

If the SCSI device that has sent the command WRITE_AV is a non-AV device or the user data is copy-prohibited digital data, namely, with the CGMS code "11" (copy prohibited), user data exchange circuit 106 converts the user data stored in user data memory 103 into NULL data. Data record circuit 101 then records the NULL data (2,048 bytes) and the CGMS control data (6 bytes) into DVD-RAM 99.

### <AV signal processing unit 47>

Fig.12 is a block diagram showing the construction of AV signal processing unit 47.

AV signal processing unit 47 is comprised of connector 500, I/O bus control circuit 601, I/O command status register 602, SCSI bus control circuit 603, data buffer 604, CGMS data detect/identify circuit 605, MPEG decoder 606, D/A convert circuit 607, control bus 608, internal data bus 609, microprocessor 610, and interface connector 611.

Connector 500 connects AV signal processing unit 47 to the I/O bus.

I/O bus control circuit 601 identifies information input from the I/O bus. More specifically, if the input information is data, I/O bus control circuit 601 stores the data into data buffer 604: if the input information is a control command such as the I/O command, stores the command into I/O command status register 602.

I/O command status register 602 is a memory for temporarily storing commands input to AV signal processing unit 47 from control unit 49, processing results by AV signal processing unit 47, etc.

SCSI bus control circuit 603, being a controller of the SCSI bus and connected to SCSI bus 43 via interface connecter 611, transmits/receives commands and data under the SCSI standard. SCSI bus control circuit 603, by the instructions sent from microprocessor 610, sends an AV data read request to DVD-ROM 41 by issuing the SCSI command for AV data reading (READ_AV) to DVD-ROM 41 and sends an AV data record request to DVD-RAM 99 by issuing the SCSI command for AV data recording (WRITE_AV) to DVD-RAM 99.

Data buffer 604 is a memory for temporarily storing data by retrieving the data from control bus 608 and internal data bus 609.

CGMS data detect/identify circuit 605 extracts the CGMS control data from the input digital data and judges the data attribute by referring to the data attribute code in CGMS control data. If the data is AV data, CGMS data detect/identify circuit 605 outputs only user data to MPEG decoder 606; if not, stops outputting the digital data to MPEG decoder 606.

MPEG decoder 606 converts the input digital data, namely, MPEG streams, into image data and voice data by decompressing the digital data in a certain manner and outputs the data.

D/A convert circuit 607 converts the voice data output from MPEG decoder 606 into analog voice signal and outputs the signal.

Control bus 608 is a path through which instructions issued by microprocessor 610, processing results sent from each circuit, etc. are transferred.

Internal data bus 609 is a bus to which I/O bus control circuit 601, SCSI bus control circuit 603, data buffer 604, and CGMS data detect/identify circuit 605 are connected.

Interface connector 611 connects AV signal processing unit 47 to the SCSI bus.

Microprocessor 610, according to the embedded control program, interprets the I/O command stored in I/O command status register 602 and the SCSI command received by SCSI bus control circuit 603 and controls the whole AV signal processing unit 47.

The following is a description of the operation by AV signal processing unit 47 for each of the following commands: the I/O command for data reading (IO_READ), the I/O command for AV data reproducing (IO_PLAY), the I/O command for AV data copying (IO_COPY), and the SCSI command for authentication (INQUIRY).

### <INQUIRY: SCSI Command for Authentication>

Microprocessor 610, on judging that an SCSI command input into SCSI bus control circuit 603 is INQUIRY for authentication, returns the machine attribute data of AV signal processing unit 47 to the device which has sent the SCSI command INQUIRY with the format shown in Fig.5(a) via SCSI bus control circuit 505. Note that the machine attribute data returned includes device type code "10010" (AV signal processing device), as shown in Fig.5(b).

### <IO_READ: I/O Command for Data Reading>

Microprocessor 610, on judging that a command input into I/O command status register 602 is the I/O command for data reading (IO_READ), instructs SCSI bus control circuit 603 to issue the SCSI command (READ) to DVD-ROM drive 46 to read digital data from DVD-ROM 41, temporarily stores the digital data received by SCSI bus control circuit 603 into data buffer 604, and instructs I/O bus control circuit 601 to output the data in data buffer 604 to control unit 49 via I/O bus 42.

### <IO_PLAY; I/O Command for AV Data Reproducing>

Microprocessor 610, on judging that a command input into I/O command status register 602 is the I/O command for AV data reproducing (IO PLAY), performs the reciprocal authentication with DVD-ROM drive 46. More specifically, microprocessor 610 instructs SCSI bus control circuit 603 to send the SCSI command for authentication (INQUIRY) to DVD-ROM drive 46, and judges whether the SCSI device which has transmitted the data is AV device by referring to the machine attribute data that is returned from DVD-ROM drive 46.

If either of the data-transmitting SCSI device and the data-receiving SCSI device is not AV device, microprocessor 610 stores an error status in I/O command status register 602 and ends processing.

If both the data-transmitting SCSI device and the data-receiving SCSI device are AV device, microprocessor 610 issues the SCSI command for AV data reading (READ_AV), to which attached the sector number specifying the AV data to be copied and also attached the machine attribute data "10111" of DVD-RAM drive 910, namely a copy target, to DVD-ROM drive 46, and temporarily stores the transferred digital data into data buffer 604. After the storage of the digital data, microprocessor 610 issues the SCSI command for AV data recording (WRITE_AV) to DVD-RAM drive 910, and outputs the digital data stored in the buffer to DVD-RAM drive 910.

### <Control Unit 49>

Control unit 49, as shown in Fig.4, is comprised of processor bus 49B, CPU 49C, bus I/F 49I, and main memory 49M. CPU 49C is connected to bus I/F 49I and main memory 49M via processor bus 49B. CPU 49C, according to the OS loaded in main memory 49M and the control program unique to the present information processing system, interprets the instructions sent from external elements via input unit 45, and controls the retrieving of the digital data from DVD-ROM 41 and the data transmission target. Control unit 49 displays a screen as shown in Fig.2 on display apparatus 48D and also controls keyboard 45K and mouse 45M in interactive communication with the user.

Note that the file management information of DVD-ROM 41 is read from DVD-ROM 41 during the initialization performed when the disk is loaded or at any other occasion and that the file management information is stored in main memory 49M in control unit 49. This is because, as described earlier, it is possible to obtain the record addresses of the files in DVD-ROM 41 by the file names by searching the file management information under ISO13346.

Control unit 49 performs the "AV data reproduction control" when it receives via input unit 45 an instruction to reproduce an AV data file in DVD-ROM 40; performs the "AV data copy control" when it receives an instruction to copy an AV data file; and performs the "data copy control" when it receives an instruction to copy a data file.

For the "AV data reproduction control," control unit 49 judges whether the specified file is the file that stores AV data by checking whether the name of the directory storing the specified file is "DVD-Video." If judged as the AV data file, control unit 49 issues the I/O command for AV data reproducing (IO_PLAY) to AV signal processing unit 47 via I/O bus 42 to reproduce the AV data file. If judged as non-AV data file, control unit 49 notifies the user of an error by a beep.

For the "AV data copy control," control unit 49 similarly judges whether the specified file is the file that stores AV data. If judged as the AV data file, control unit 49 issues the I/O command for AV data copying (IO_COPY) to AV signal processing unit 47 via I/O bus 42 to copy the AV data file. If judged as non-AV data file, control unit 49 notifies the user of an error by a beep.

For the "data copy control," control unit 49 similarly judges whether the specified file is the file that stores AV data. If judged as the non-AV data file, control unit 49 issues the I/O command for data reading (IO_READ) to AV signal processing unit 47 via I/O bus 42 to copy the non-AV data file. If judged as the AV data file, control unit 49 notifies the user of an error by a beep.

Note that control unit 49 also outputs with the above I/O commands, as parameters attached to the commands, the ID code for identifying the device which specifies a drive for data reading/writing, the start address of the file to be read, and the data length.

### <Command List>

Figs.13(a) and 13(b) show the above I/O commands and SCSI commands. Fig.13(a) shows the I/O commands which are control instructions issued from control unit 49 to AV signal processing unit 47 via I/O bus 42. Fig.13(b) shows the SCSI commands which are control instructions transferred between the SCSI devices via SCSI bus 43.

### <Information Processing System Operation>

The following is a description of the operation of the information processing system constructed as above for three cases: (1) a file is copied from DVD-ROM 41 to DVD-RAM 99; (2) a file is copied from DVD-ROM 41 to HD apparatus 44; and (3) a file in DVD-ROM 41 is reproduced. Note that, as mentioned earlier, the file management information is stored in main memory 49M in control unit 49 during the initialization performed when DVD-ROM 41 is loaded into DVD-ROM drive 46.

### <Copy to DVD-RAM 99>

The following is a description of the operation of the information processing system when a file is copied from DVD-ROM 41 to DVD-RAM 99.

Fig.14 is a flowchart showing the procedure of copying an AV data file from DVD-ROM 41 to DVD-RAM 99.

Fig.15 shows a series of communications in the above copying performed between control unit 49, AV signal processing unit 47, DVD-ROM drive 46, and DVD-RAM drive 910.

Control unit 49, on receiving a file copy request from the user via input 45, judges whether the file is AV data by referring to the name of the directory that stores the file (S300, S301).

If judged as a non-AV data file, control unit 49 notifies the user of an error by an error message and ends the operation (S303, S304).

If judged as an AV data file, control unit 49 issues the I/O command for AV data copying (IO_COPY) to AV signal processing unit 47 (S302, Q300).

AV signal processing unit 47, on receiving the I/O command IO_COPY, performs the AV device reciprocal authentication with DVD-ROM drive 46 by issuing the SCSI command for authentication (INQUIRY) to DVD-ROM drive 46 (S305, Q301-Q304).

AV signal processing unit 47 performs the AV device reciprocal authentication also with DVD-RAM drive 910 by issuing the SCSI command for authentication (INQUIRY) to DVD-RAM drive 910 (S306, Q305-Q308).

If both the above AV device reciprocal authentications successfully end, AV signal processing unit 47 issues the SCSI command for AV data reading (READ_AV) to DVD-ROM drive 46 (S307, Q309).

DVD-ROM drive 46, on receiving the command, reads digital data and transfers the data to AV signal processing unit 47 (process H, Q310).

Fig.16 is a flowchart showing the procedure of process H.

DVD-ROM drive 46, on receiving the SCSI command for AV data reading (READ_AV), reads data from DVD-ROM 41 by the specified address and stores the CGMS control data into CGMS control data memory 502, the user data into user data memory 503 (S321).

DVD-ROM 41 judges by the CGMS control data whether the sector data can be copied (S322). More specifically, CGMS data identify circuit 504 judges whether the user data attribute stored in user data memory 503 is "not specified" of "AV data" and also judges whether the user data copy limitation information stored in user data memory 503 is "copy permitted (d7,d6=0,0)," "one-generation copy permitted (d7, d6=1,0)," or "copy prohibited (d7,d6=1,1)" by referring to the CGMS control data stored in CGMS control data memory 502.

DVD-ROM drive 46 judges whether the AV device reciprocal authentication has succeeded, that is, whether the data reception apparatus is a formal data reception apparatus (5323). If succeeded and the judgement in step S322 shows that the data is AV data and "copy permitted" or "one-generation copy permitted," DVD-ROM drive 46 transfers the sector data to AV signal processing unit 47 in a data transfer unit of 2,054 bytes which is a total of the CGMS control data (6 bytes) and the user data (2,048 bytes) (S325). Otherwise, DVD-ROM drive 46 instructs user data exchange circuit 506 to convert the user data into NULL data (5324) then transfers the NULL data to AV signal processing unit 47 (S325).

When the above process H completes, AV signal processing unit 47, having received the digital data from DVD-ROM drive 46, issues the SCSI command for AV data recording (WRITE_AV) to DVD-RAM drive 910 (S311) and transfers the digital data (S308, Q312).

DVD-RAM drive 910, on receiving the digital data from AV signal processing unit 47, records the data into DVD-RAM 99 (process I, Q311-Q313).

Fig.17 is a flowchart showing the procedure of process I.

DVD-RAM drive 910, on receiving the above digital data, divides the data into the CGMS control data and the user data (S331). More specifically, DVD-RAM drive 910 stores the user data of the digital data into user data memory 103, the CGMS control data into CGMS control data memory 102.

DVD-RAM drive 910 judges whether the user data stored in user data memory 103 is copy-permitted data (S332). More specifically, if the CGMS code in the CGMS data is "copy permitted (d7,d6=0,0)" or "one-generation copy permitted (d7,d6=1,0)," it is judged that the data is copy-permitted data.

DVD-RAM drive 910 judges whether the AV device reciprocal authentication performed earlier (Q307, Q308) is a success and whether the user data is copy-permitted data (S333). For the above judgement, DVD-RAM drive 910 judges whether the SCSI device that has issued the SCSI command for AV data recording (WRITE_AV) is an AV device by referring to the machine attribute data acquired through the reciprocal authentication.

DVD-RAM drive 910 converts the user data stored in user data memory 103 into NULL data if the above judgement (S333) is not satisfying, that is, the reciprocal authentication has failed or the digital data is copy-prohibited (S334).

DVD-RAM drive 910 updates the CGMS control data if the above judgement is satisfying (S335). More specifically, DVD-RAM drive 910 overwrites the CGMS control data with "copy prohibited (d7,d6=1,1)" if the CGMS control data is "one-generation copy permitted (d7,d6=1,0)" (S335).

DVD-RAM drive 910 records the user data and the updated CGMS control data into DVD-RAM 99 (S336).

By repeating the above process (process H to process I) for a specified length of data to be transferred, digital data is copied from DVD-ROM 41 to DVD-RAM 99 with its copyright protected (S309, S310).

### <Copy to HD Apparatus 44>

The following is a description of the operation of the information processing system when a file is copied from DVD-ROM 41 to HD apparatus 44.

Fig.18 is a flowchart showing the procedure of copying a file from DVD-ROM 41 to HD apparatus 44.

Fig.19(a) shows a series of communications in the above copying performed between control unit 49, AV signal processing unit 47, DVD-ROM drive 46, and HD apparatus 44 when the above file is a non-AV data file and the data read from DVD-ROM drive 46 is non-AV data.

Fig.19(b) shows a series of communications in the above copying performed between control unit 49, AV signal processing unit 47, DVD-ROM drive 46, and HD apparatus 44 when the above file is a non-AV data file and the data read from DVD-ROM drive 46 is AV data.

Control unit 49, on receiving a file copy request from the user via input 45, judges whether the file is an AV data file by referring to the name of the directory that stores the file (S201, S202).

If judged as an AV data file, control unit 49 notifies the user of an error by an error message and ends the operation (S202, S204, S213).

If judged as a non-AV data file, control unit 49 issues the I/O command for data reading (IO_READ) to AV signal processing unit 47 (S202, S203, Q200, Q210).

AV signal processing unit 47, on receiving the I/O command (IO_READ), issues the SCSI command for data reading (READ) to DVD-ROM drive 46 (S205, Q201, Q211).

DVD-ROM drive 46, on receiving the command, reads the specified digital data and transfers the data to control unit 49 via AV signal processing unit 47 (process C, Q202-Q203, Q212-Q213).

Fig.20 is a flowchart showing the procedure of process C.

DVD-ROM drive 46, on receiving the SCSI command for data reading (READ), reads data from DVD-ROM 41 by the specified address and detects the CGMS control data in the user data of the digital data (S206). DVD-ROM drive 46 judges by referring to the detected CGMS control data whether the data attribute of the user data is AV data (S207).

If judged as a non-AV data file, DVD-ROM drive 46 transfers the user data (2,048 bytes) to AV signal processing unit 47 (S209, S202). If judged as AV data, DVD-ROM drive 46 instructs user data exchange circuit 506 to convert the user data into NULL data then transfers the NULL data to AV signal processing unit 47 (S208, Q212).

The digital data transferred to AV signal processing unit 47 is re-transferred to control unit 49 (Q203, Q213) to be recorded in HD apparatus 44 through the writing process by control unit 49 (S210, Q204-Q207, Q214-Q217). More specifically, control unit 49 outputs the read digital data again to AV signal processing unit 47 with the I/O command for data writing (IO_WRITE) specifying HD apparatus 44 as the target SCSI device (Q204, Q214). AV signal processing unit 47 writes into HD apparatus 44 the digital data with the SCSI command for data writing (WRITE) (Q205-Q207, Q215-Q217).

By repeating the above process (process C, S210) for a specified length of data to be transferred, the digital data recorded in DVD-ROM 41 is copied to HD apparatus 44 as follows: non-AV data files are copied as they are; AV data files are converted into NULL data before being copied (S211, S212).

### <Reproduction>

The following is a description of the operation of the information processing system when an AV data file is reproduced.

Fig.21 is a flowchart showing the procedure of reproducing an AV data file recorded in DVD-ROM 41.

Fig.22 shows a series of communications in the above reproduction performed between control unit 49, AV signal processing unit 47, and DVD-ROM drive 46 when the above file is reproduced.

Control unit 49, on receiving a reproduction request with a specified file from the user via input 45 (S100), judges whether the file is an AV data file by referring to the name of the directory that stores the file (S101).

If judged as an AV data file, control unit 49 issues the I/O command for AV data reproducing (IO_PLAY) to AV signal processing unit 47 requesting the unit 47 to read the file from DVD-ROM drive 46 (S102, Q100); if judged as a non-AV data file, control unit 49 enters an error handling process, for example it notifies the user of an error by a beep (S103), and ends processing (S104).

AV signal processing unit 47, on receiving the I/O command IO_PLAY, performs the AV device reciprocal authentication with DVD-ROM drive 46 by issuing the SCSI command for authentication (INQUIRY) to DVD-ROM drive 46 (S105, Q101-Q104).

If the above AV device reciprocal authentication successfully ends, AV signal processing unit 47 issues the SCSI command for AV data reading (READ_AV) to DVD-ROM drive 46 (S106, Q105).

DVD-ROM drive 46, on receiving the command, reads and transfers the data (process A, Q106).

Fig.23 is a flowchart showing the procedure of process A.

DVD-ROM drive 46, on receiving the SCSI command for data reading (READ_AV), reads data from DVD-ROM 41 by the specified address and

DVD-ROM drive 46, on receiving the SCSI command for AV data reading (READ_AV), reads data from DVD-ROM 41 by the specified address and stores the CGMS control data into CGMS control data memory 502, the user data into user data memory 503 (S107).

CGMS data identify circuit 504 judges whether the sector data is AV data based on the CGMS control data (S108). If not AV data, control jumps to step S111; if it is AV device, jumps to step S109.

DVD-ROM drive 46 judges whether the above AV device reciprocal authentication has successfully ended, that is, whether the data reception apparatus is a formal data reception apparatus (S109).

If the AV device reciprocal authentication has successfully ended, DVD-ROM drive 46 transfers the sector data to AV signal processing unit 47 in a data transfer unit of 2,054 bytes which is a total of the CGMS control data (6 bytes) and the user data (2,048 bytes) (S111). Otherwise, DVD-ROM drive 46 instructs user data exchange circuit 506 to convert the user data into NULL data (S110) then transfers the NULL data to AV signal processing unit 47 (S111).

After the above processes, AV signal processing unit 47 outputs images (process B).

Fig.24 is a flowchart showing the procedure of process B.

AV signal processing unit 47, on receiving the digital data from DVD-ROM drive 46, divides the data into the CGMS control data and the user data (S112).

AV signal processing unit 47 judges whether the AV device reciprocal authentication has successfully ended, that is, whether the data reception apparatus is a formal data reception apparatus (S113).

If the AV device reciprocal authentication has not successfully ended, AV signal processing unit 47 ends process B.

If the AV device reciprocal authentication has successfully ended, AV signal processing unit 47 judges whether the user data is AV data by referring to the CGMS control data. If not AV data, AV signal processing unit 47 ends process B. If AV data, AV signal processing unit 47 decodes the user data to obtain the image data and voice data. The obtained image data is output to video signal processing unit 48; the obtained voice data is converted from digital to analog then output to speaker 47S as analog voice signal (S115).

The analog voice signal is output from speaker 475. The image data is combined with graphics data and converted into an analog image signal by video signal processing unit 48 then displayed on display apparatus 48D (S116) as a last step in process B.

By repeating the above processes (processes A and B) for a specified length of data to be transferred, the AV data file reproduction process ends (S117, S118, Q107).

### <summary>

As understood from the above description, a data reception device (DVD-ROM drive 46) of the information processing system in the present invention includes a control unit which makes a control so that the AV data is output with specified use form information only when it is judged that the digital data includes AV data and that the data reception apparatus is a formal data reception apparatus.

Data reception devices (AV signal processing unit 47 and DVD-RAM drive 910) of the information processing system in the present invention includes an authentication unit which identifies the use form and reproduces or records the input AV data in a range of specified use form and generates and outputs authentication data indicating the above operation.

With the above construction, the information processing system including the data transmission apparatus and data reception apparatus of the present invention prohibits the AV data from being output to SCSI devices that are not formal data reception devices that deal with the AV data in a range of specified use form.

In the information processing system of the present embodiment, as understood from the communication sequences shown in Figs.22 and 15, the AV data is transferred between the SCSI devices without passing through control unit 49. With this construction, a malfunction, in which the AV data is extracted while passing through control unit 49, is prevented.

The information record medium of the present embodiment includes information with which it is recognized whether the digital data is AV data both in the file management level and sector management level, the information also specifying the use form range of the AV data. With this construction, both of the apparatuses that recognize only with the file management level (e.g., personal computers) and the apparatuses that recognize only with the sector management level (e.g., disk drives) recognize the digital data and also recognize the use form if the digital data is the AV data. Accordingly, the information record medium of the present embodiment is suitable for such a system as the present information processing system that includes a personal computer and disk drives.

### <Notes>

The present invention is not limited to the contents of the information processing apparatus described above in First Embodiment.

In First Embodiment, DVD-RAM drive 910 records data into a rewritable DVD (DVD-RAM 99). However, a direct-read-after-write DVD or a magnet-optical disk such as a Magneto-Optical (MO) disk may be used instead of DVD-RAM 99.

In First Embodiment, digital data is reproduced or copied through AV signal processing unit 47. However, for reproducing or copying, such apparatuses as DVD-ROM 41 and DVD-ROM drive 910 may directly communicate with one another as SCSI controllers.

Note that for the information processing system of the present embodiment, it is preferred to set the parameters for the motion picture information stored in DVD-ROM 41 as follows: motion picture information with high resolution, namely, horizontal resolution of 4501pi or more, is recorded in DVD-ROM 41 as the data conforming to the MPEG standard, namely, as digital data with the frames compression. This is because it provides high-quality pictures to enable movie applications, increasing the value of the effects on copyright protection generated by the present invention.

In First Embodiment, three types of CGMS codes, namely, "copy permitted," "one-generation copy permitted," and "copy prohibited" are defined. It is needless to say, however, that the copyright protection process may deal with more use forms, for example, by defining a copy permitted to the second generation or third generation with the use of another reservation code (d7=0, d6=1).

### <<Second Embodiment>>

Now, the information processing system of Second Embodiment is described. The information processing system of the second embodiment reads digital data recorded in a DVD and processes (reproduces and copies) the read digital data within a range of use form specified by the copyright owner, the system being characterized by use of encryption in reciprocal authentication and data transfer.

### <Construction of Information Processing System>

Fig.25 shows an appearance of the information processing system of the second embodiment. Fig.26 is a block diagram showing the construction of the information processing system.

The information processing system is comprised of control unit 1049, I/O bus 1042, input unit 45, keyboard 45K, mouse 45M, HD apparatus 44, DVD-ROM drive 1046, DVD-ROM 41, DVD-RAM drive 1910, DVD-RAM 99, AV signal processing unit 1047, video signal processing unit 48, display apparatus 48D, and speaker 47S. The elements with the same numbers are the same as those of the information processing system in the first embodiment.

As understood from a comparison between Fig.4 and Fig.26, the information processing systems of the first and second embodiments are the same in terms of the basic elements but differ from one another as follows:

The present information processing system does not include the SCSI interface used in the first embodiment as an external bus. All the main elements, namely, 1049, 44, 1046, 1910, and 1047 are connected to I/O bus 1042, an internal bus, and are contained in a chassis as shown in the appearance in Fig.25.

I/o bus 1042 is a digital interface called the AT Attachment Packet Interface (ATAPI). ATAPI, different from SCSI, has a limitation under the standard that only control unit 1049 can be a bus master. That is, it is not possible for ATAPI to directly transfer the AV data or commands between DVD-ROM drive 1046 and AV signal processing unit 1047, which is possible for SCSI. Accordingly, all the AV data and commands pass through control unit 1049. This means that the AV data may be easily copied at control unit 1049.

The information processing system of the second embodiment protects the AV data with higher security level, that is, the data transmission apparatus (DVD-ROM drive 1046) and data reception apparatuses (AV signal processing unit 1047 and DVD-RAM drive 1910) include an element that performs encryption and decryption as well as the reciprocal authentication. With this construction, the copyright of the AV data is protected, for example, even if the AV data is illegally copied or extracted from I/O bus 1042 with a malfunction since the AV data has been encrypted.

The following is a description of the present information processing system mainly in terms of the different elements and operations from those of the first embodiment.

### <DVD-ROM drive 1046>

Fig.27 is a block diagram showing the construction of DVD-ROM drive 1046.

DVD-ROM drive 1046 includes interface connector 1500, data read circuit 501, CGMS control data memory 502, user data memory 503, CGMS data identify circuit 504, interface control circuit 1505, user data exchange circuit 506, internal data bus 507, control bus 508, microprocessor 1509, and encryption/authentication circuit 1510. The elements different from those of DVD-ROM drive 1046 are described below.

Interface connector 1500 connects I/O bus 1042 to DVD-ROM drive 1046.

Interface control circuit 1505 controls the transmission and reception of commands and data through I/O bus 1042 according to ATAPI method.

Microprocessor 1509, according to the embedded control program, interprets the command received by interface control circuit 1505 and controls the whole DVD-ROM drive 1046. The commands and controls are described later in detail.

Encryption/authentication circuit 1510, according to the instruction from microprocessor 1509, performs an authentication and encryption before the digital data is output to I/O bus 1042.

In the authentication performed by encryption/ authentication circuit 1510, which is different from the AV device reciprocal authentication of the first embodiment, the data transmission apparatus and data reception apparatus authenticate one another as the formal apparatuses by exchanging the data for authentication. The authentication is comprised of three steps, namely, generating authentication data, judging authentication result, and generating proof data. The encryption performed by encryption/authentication circuit 1510, which is a process for encrypting the digital data read from DVD-ROM 41, consists of two steps, namely, generating the encryption key and encrypting.

Encryption/authentication circuit 1510 performs calculations for generating random numbers and calculations with encryption function E(KEY1,DATA) in the above encryption and authentication. The following is a description of the calculations and the characteristics.

Encryption function E(KEY1,DATA) indicates a conversion of data (DATA) with a certain encryption algorithm with the use of an encryption key (KEY1). The reversed function of the encryption function E(KEY1,DATA) is decryption function D(KEY2,DATA), where "KEY2" indicates a decryption key. If the encrypted data is indicated as "EncryptData" and represented as EncryptData = E(KEY1,Data), then established is equation Data = D(KEY2,EncryptData). That is, "EncryptData," the data encrypted with the encryption function E(KEY1,DATA), is decrypted by performing an operation with decryption function D(KEY2,DATA), namely operation D(KEY2,EncryptData), and the original data "Data" is obtained. Note that for encryption function E(KEY1,DATA) and decryption function D(KEY2,DATA) used in the present embodiment, it is supposed that equation "encryption key KEY1 = decryption key KEY2" is established. Accordingly, hereinafter the encryption key and decryption key are treated as the same.

In the present embodiment, the calculation for generating random numbers indicates generating a 16-bit random number. Typically, a dynamic hardware value is used to generate a random number. For example, each application has its own data for initialization. The initialization data may be used for the random number since the initialization data is held in the DVD drive before data reading. Also, a timer may be formed in the system and used for the purpose.

The following is a description of the functions of encryption/authentication circuit 1510, namely, generating authentication data, judging authentication result, generating proof data, generating the encryption key, and encrypting.

### <Generating Authentication Data>

Encryption/authentication circuit 1510 generates two random numbers R1 and R2 (each has 16 bits, as described earlier) then generates a 32-bit value by combining R1 and R2 respectively as the higher 16 bits and lower 16 bits. Note that the 32-bit value is represented as "data R1||R2"

Encryption/authentication circuit 1510 encrypts the data R1||R2 with encryption function E(KEY,DATA) with the use of a prestored encryption key S to generate authentication data C1. That is, equation "authentication data C1 = E(S,R1||R2" is established.

### <Judging Authentication Result>

The judgdement of the authentication result is a process performed by DVD-ROM drive 1046, a data transmission apparatus, to judge whether a data reception apparatus (AV signal processing unit 1047, DVD-RAM drive 1910) is a formal data reception apparatus. The judgement is made by judging whether the data reception apparatus has decryption function D(KEY,DATA) and the decryption key S. The process is described in detail below.

DVD-ROM drive 1046 outputs "authentication data C1 = E(S,R1||R2)" generated as the authentication data to the authentication target, namely, the data reception apparatus. The data reception apparatus decrypts the authentication data C1 with decryption function D(KEY,DATA) with the use of decryption key S to specify a value equivalent to random number R2, and returns the value to DVD-ROM drive 1046 as proof data K1.

If the data receptin apparatus has decryption function D(KEY,DATA) and the decryption key S, then the apparatus should be able to calculate random number R2 from authentication data C1. This is because the data reception apparatus may decrypt authentication data C1 to obtain data R1||R2 and detect the lower 16 bits thereof as random number R2.

In DVD-ROM drive 1046, encryption/authentication circuit 1510 judges the authentication result by using the proof data K1 received from the data reception apparatus. More specifically, if K1=R2, encryption/ authentication circuit 1510 notifies microprocessor 1509 of the authentication success; if not K1=R2, the authentication failure.

Through the process described above, DVD-ROM drive 1046 may authenticate that the data reception apparatus is a formal data reception apparatus.

### <Generating Proof Data>

To complete the reciprocal authentication, it is necessary for the data reception apparatus to authenticate DVD-ROM drive 1046. In this authentication process, DVD-ROM drive 1046 generates proof data to prove itself to be a formal data transmission apparatus. This is described in detail below.

The data reception apparatus outputs authentication data C2, which is obtained by converting data R3||R4 generated from random numbers R3 and R4 by decryption function D(KEY,DATA) with decryption key S, to DVD-ROM drive 1046. That is, authentication data C2 equals to D(S,R3||R4).

In DVD-ROM drive 1046, encryption/authentication circuit 1510 obtains a value corresponding to the random number R4 from authentication data C2 with encryption function E(KEY,DATA) and encryption key S and returns the value to the data reception apparatus as proof data K2. More specifically, encryption/authentication circuit 1510 obtains data R3||R4 by performing operation E(S,C2). The circuit 1510 then obtains, from data R3||R4, random number R4 used as the proof data K2. The data reception apparatus judges the authentication result using the proof data K2 sent from the data transmission apparatus. That is, if K2=R4, the data reception apparatus judges that the authentication has succeeded; if not K2=R4, failed.

### <Generating the Encryption Key>

The encryption key generated here is a secret key used to encrypt the digital data read from DVD-ROM 41.

Encryption/authentication circuit 1510, according to an instruction from microprocessor 1509, generates data R1||R3 as the encryption key by combining random numbers R1 and R3 which are respectively obtained as the authentication data and proof data in the previous processes. Accordingly, the encryption key has a different value for each authentication performed between DVD-ROM drive 1046 and the data-transfer-target apparatus.

### <Encrypting>

A key generated in this process is a secret key used to encrypt the digital data read from DVD-ROM 41.

Encryption/authentication circuit 1510, according to an instruction from microprocessor 1509, encrypts the digital data read from DVD-ROM 41 with the generated encryption key R1||R3 and encryption function E(KEY,DATA). That is, the circuit performs an operation "EncryptData = E(R1||R3,Data)," where the input data is "Data," and the encrypted data "EncryptData."

Now, the operation of DVD-ROM drive 1046 for each input command is described: data read command (READ), AV data read command (READ_AV), data reception apparatus authentication command (CHALLENGE_RECEIVER), data reception apparatus confirmation command (CONFIRM_RECEIVER), data transmission apparatus proof command (PROOF_SENDER), and proof data acquire command (GET_PROOF_INFO).

Among the above commands, the data read command (READ) allows DVD-ROM drive 1046 to operate the same as the corresponding one in the first embodiment. Accordingly, the other commands are described here. Note that the latter four commands, namely, CHALLENGE_RECEIVER, CONFIRM_RECEIVER, PROOF SENDER, and GET_PROOF_INFO are a series of authentication commands executed before the input of AV data read command (READ_AV).

### <CHALLENGE_RECEIVER: Data Reception Apparatus Authentication Command>

Microprocessor 1509, on judging that an input command is the data reception apparatus authentication command (CHALLENGE_RECEIVER), generates authentication data by using encryption/authentication circuit 1510 and outputs the authentication data to control unit 1049 via interface control circuit 1505 to start the authentication of the data reception apparatus.

### <CONFIRM_RECEIVER: Data Reception Apparatus Confirmation Command>

Microprocessor 1509, on judging that an input command is the data reception apparatus confirmation command (CONFIRM RECEIVER), checks the authentication data input with the above command by using encryption/authentication circuit 1510 to judge whether the above authentication is successful, and holds the judgement result inside.

### <PROOF SENDER: Data Transmission Apparatus Proof Command>

Microprocessor 1509, on judging that an input command is the data transmission apparatus proof command (PROOF SENDER), generates proof data from the authentication data input with the above command by using encryption/authentication circuit 1510 to prove that the apparatus itself is a formal data transmission apparatus and holds the proof data inside.

### <GET_PROOF_INFO: Proof Data Acquire Command>

Microprocessor 1509, on judging that an input command is the proof data acquire command (GET_PROOF_INFO), outputs the proof data held inside to control unit 1049 via interface control circuit 1505 to transmit the proof data to the data reception apparatus.

### <READ_AV: AV Data Read Command>

Microprocessor 1509, on judging that an input command is the AV data read command (READ_AV), performs generation of an encryption key and encryption as well as the process for an input of the command (READ_AV) as described in the first embodiment.

More specifically, encryption/authentication circuit 1510 generates an encryption key and encrypts the user data (2,048 bytes) stored in user data memory 503 by using the encryption key if the digital data read from DVD-ROM 41 is AV data and the authentication of the data reception apparatus has been successful. Microprocessor 1509 outputs the encrypted user data (2,048 bytes) and the CGMS control data stored in CGMS control data memory 502 (6 bytes), namely, 2,054 bytes of digital data in total, to control unit 1049. Otherwise, the command (READ_AV) is executed the same as described in the first embodiment.

### <DVD-RAM drive 1910>

Fig.28 is a block diagram showing the construction of DVD-RAM drive 1910.

DVD-RAM drive 1910 includes interface connector 1100, data record circuit 101, CGMS control data memory 102, user data memory 103, CGMS data identify/update circuit 104, interface control circuit 1105, user data exchange circuit 106, internal data bus 107, control bus 108, microprocessor 1109, and decryption/authentication circuit 1110. The elements different from those of DVD-RAM drive 910 are described below.

Interface connector 1100 connects I/O bus 1042 to DVD-RAM drive 1910.

Interface control circuit 1105 controls the transmission and reception of commands and data through I/O bus 1042 according to ATAPI method.

Microprocessor 1109, according to the embedded control program, interprets the command received by interface control circuit 1105 and controls the whole DVD-RAM drive 1910. The commands and controls are described in detail later.

Decryption/authentication circuit 1110, according to the instruction from microprocessor 1109, performs an authentication and decryption. The authentication is performed to authenticate the data transmission apparatus and is comprised of three steps, namely, generating proof data, generating authentication data, and judging authentication result. The decryption is performed to decrypt the input encrypted digital data and is comprised of two steps, namely, generating the decryption key and decrypting.

Decryption/authentication circuit 1110 performs calculations for generating random numbers and calculations with decryption function D(KEY,DATA) in the above decryption and authentication. The decryption function D(KEY,DATA) is the reversed function of the encryption function E(KEY,DATA) used by encryption/authentication circuit 1510 of DVD-ROM drive 1046.

### <Generating Proof Data>

In this authentication process, DVD-RAM drive 1910 generates proof data to prove itself to be a formal data reception apparatus against the data transmission apparatus.

More specifically, the decryption/authentication circuit 1110 decrypts the authentication data C1 (=E(S,R1||R2)) with decryption function D(KEY,DATA) with the use of decryption key S, which is held inside. The circuit 1110 extracts random number R2 from data (=R1||R2) which is a result of the above process, and returns the random number R2 to the data transmission apparatus as proof data K1.

### <Generating Authentication Data>

In this generation of authentication data, DVD-RAM drive 1910 authenticates the data transmission apparatus as a formal data transmission apparatus.

Decryption/authentication circuit 1110 generates two 16-bit random numbers R3 and R4 then generates a 32-bit data R3||R4 by combining R3 and R4 respectively as the higher 16 bits and lower 16 bits.

Decryption/authentication circuit 1110 decrypts the data R3||R4 with decryption function D(KEY,DATA) with the use of the above encryption key S to generate authentication data C2 (= D(S,R3||R4).

### <Judging Authentication Result>

The judgement of the authentication result is a process performed by DVD-RAM drive 1910 to judge whether the authentication of the data transmission apparatus as a formal data transmission apparatus has succeeded.

More specifically, decryption/authentication circuit 1110 makes the above by judging whether the proof data K2 returned from the data transmission apparatus is equivalent to random number R4. If equivalent, the circuit 1110 judges that the authentication has succeeded.

### <Generating the Decryption Key>

In this process, the decryption key, which is used to decrypt the encrypted digital data sent from the data transmission apparatus, is generated.

More specifically, decryption/authentication circuit 1110 generates decryption key R1||R3 by combining random numbers R1 and R3 which are obtained through the generation of proof data and authentication data.

### <Decrypting>

In this process, the encrypted digital data sent from the data transmission apparatus is decrypted.

More specifically, decryption/authentication circuit 1110 decrypts the above digital data with decryption function D(KEY,DATA) with the use of the above encryption key.

The above operation is supported by the following. The encrypted digital data, namely, EncryptData, sent from the data transmission apparatus is digital data "Data" encrypted with encryption key R1||R3 and encryption function E(KEY,DATA), that is, EncryptData = E(R1||R3,Data). Therefore, the original data "Data" is equivalent to the data obtained by decrypting the encrypted digital data EncryptData with decryption function D(KEY,DATA) and decryption key R1||R3, that is, the data obtained = D(R1||R3,EncryptData.

Now, the operation of DVD-RAM drive 1910 for each input command is described: data reception apparatus proof command (PROOF_RECEIVER), proof data acquire command (GET_PROOF_INFO), data transmission apparatus authentication command (CHALLENGE SENDER), data transmission apparatus confirmation command (CONFIRM_SENDER), and AV data record command (WRITE_AV).

Among the above commands, four commands, namely, PROOF RECEIVER, GET_PROOF_INFO, CHALLENGE_SENDER, CONFIRM_SENDER are a series of authentication commands executed before the input of AV data read command (READ_AV).

### <PROOF_RECEIVER: Data Reception Apparatus Proof Command>

Microprocessor 1109, on judging that an input command is the data reception apparatus proof command (PROOF_RECEIVER), generates proof data from the authentication data input with the above command by using decryption/authentication circuit 1110 to prove that the apparatus itself is a formal data reception apparatus and holds the proof data inside.

### <GET_PROOF_INFO: Proof Data Acquire Command>

Microprocessor 1109, on judging that an input command is the proof data acquire command (GET_PROOF_INFO), outputs the proof data held inside to control unit 1049 via interface control circuit 1105 to return the proof data.

### <CHALLENGE_SENDER: Data Transmission Apparatus Authentication Command>

Microprocessor 1109, on judging that an input command is the data transmission apparatus authentication command (CHALLENGE_SENDER), generates authentication data by using decryption/authentication circuit 1110 and outputs the authentication data to control unit 1049 via interface control circuit 1105 to start the authentication of the data transmission apparatus.

### <CONFIRM_SENDER: Data Transmission Apparatus Confirmation Command>

Microprocessor 1109, on judging that an input command is the data transmission apparatus confirmation command (CONFIRM_SENDER), checks the authentication data input with the above command by using decryption/authentication circuit 1110 to judge whether the above authentication is successful, and holds the judgement result inside.

### <WRITE_AV: AV Data Record Command>

Microprocessor 1109, on judging that an input command is the AV data record command (WRITE_AV), performs generation of a decryption key and decryption as well as the process for an input of the SCSI command for AV data recording (WRITE_AV) as described in the first embodiment.

More specifically, microprocessor 1109, on receiving the digital data in unit of 2,054 bytes, stores the user data of the digital data into user data memory 103, the CGMS control data into CGMS control data memory 102.

CGMS data identify/update circuit 104 judges whether the user data stored in user data memory 103 is copy-permitted data. More specifically, CGMS data identify/update circuit 104 judges that the user data is copy-permitted data if the CGMS code of the CGMS data is "copy permitted (d7,d6=0,0)" or "one-generation copy permitted (d7,d6=1,0)." Microprocessor 1109 then judges whether the previous authentication has succeeded.

If the data transmission is a formal data transmission apparatus and the user data is copy-permitted digital data, CGMS data identify/update circuit 104 updates the CGMS control data. Decryption/authentication circuit 1110 generates a decryption key and decrypts the user data with the decryption key. Data record circuit 101 records the decrypted user data (2,048 bytes) and the updated CGMS control data (6 bytes) into DVD-RAM 99.

User data exchange circuit 106 converts the user data stored in user data memory 103 into NULL data if the data transmission apparatus is not a formal data transmission apparatus or the digital data is "copy-prohibited," namely the CGMS code is "copy prohibited (d7,d6=1,1)." Data record circuit 101 then records the NULL data (2,048 bytes) and the CGMS control data (6 bytes) into DVD-RAM 99.

### <AV signal processing unit 1047>

Fig.29 is a block diagram showing the construction of AV signal processing unit 1047.

AV signal processing unit 1047 is comprised of connector 1600, I/O bus control circuit 1601, I/O command status register 602, decryption/authentication circuit 1603, data buffer 604, CGMS data detect/identify circuit 605, MPEG decoder 606, D/A convert circuit 607, control bus 608, internal data bus 609, and microprocessor 1610. The elements different from those of AV signal processing unit 47 of the first embodiment are described below.

Connector 1600 connects I/O bus 1042 to AV signal processing unit 1047.

Interface control circuit 1601 controls the transmission and reception of commands and data through I/O bus 1042 according to ATAPI method.

Microprocessor 1109, according to the embedded control program, interprets the command stored in I/O command status register 602 and controls the whole AV signal processing unit 47. The commands and controls are described in detail later.

Decryption/authentication circuit 1603, according to the instruction from microprocessor 1610, performs an authentication and decryption. The authentication is performed to authenticate the data transmission apparatus and is comprised of three steps, namely, generating proof data, generating authentication data, and judging authentication result. The decryption is performed to decrypt the input encrypted digital data and is comprised of two steps, namely, generating the decryption key and decrypting. These five steps are the same as those performed by decryption/authentication circuit 1110 of DVD-RAM drive 1910.

Decryption/authentication circuit 1110 performs calculations for generating random numbers and calculations with decryption function D(KEY,DATA) in the above decryption and authentication. The calculations for generating random numbers are the same as those performed by DVD-ROM drive 1046. The decryption function D(KEY,DATA) is the reversed function of the encryption function E(KEY,DATA) used by encryption/authentication circuit 1510 of DVD-ROM drive 1046.

The following is a description of the operation by AV signal processing 1047 for each the input commands: data reception apparatus proof command (PROOF_RECEIVER), proof data acquire command (GET_PROOF_INFO), data transmission apparatus authentication command (CHALLENGE_SENDER), data transmission apparatus confirmation command (CONFIRM_SENDER), and AV data reproduce command (PLAY_AV).

Among the above commands, former four commands, namely, PROOF_RECEIVER, GET_PROOF_INFO, CHALLENGE_SENDER, CONFIRM SENDER are a series of authentication commands executed before the input of AV data reproduce command (PLAY_AV). These commands are not described here since they are executed the same as those in DVD-RAM drive 1910.

### <PLAY_AV: AV Data Reproduce Command>

Microprocessor 1610, on judging that an input command is the AV data reproduce command (PLAY_AV), does not process the input digital data at all if the authentication previously done by decryption/authentication circuit 1603 has not succeeded.

If the authentication has succeeded, microprocessor 1610 temporarily stores the transferred data into data buffer 604, decrypts the encrypted data by using decryption/authentication circuit 1603, and outputs the decrypted digital data to MPEG decoder 606 via CGMS data detect/identify circuit 605.

If, in the above data transfer, CGMS data detect/identify circuit 605 judges that the digital data is non-AV data, microprocessor 1610 ends processing the digital data and terminates, that is, stops transferring the digital data to MPEG decoder 606.

If CGMS data detect/identify circuit 605 judges that the digital data is AV data, the digital data is input to MPEG decoder 606, decompressed, and converted into image data and voice data. The voice data is further converted into a voice analog signal by D/A convert circuit 607 and is output to speaker 47S to be output therefrom as a voice. The converted image data is output to video signal processing unit 48.

### <Control Unit 1049>

Control unit 1049, as shown in Fig.26, is comprised of processor bus 49B, CPU 1049C, bus I/F 49I, and main memory 49M. CPU 1049C, according to the OS loaded in main memory 49M and the control program unique to the present information processing system, interprets the instructions sent from external elements via input unit 45, and controls the retrieving of the digital data from DVD-ROM 41 and the data transmission target.

The present control unit 1049, by its appearance, controls the same as control unit 49 in the first embodiment. That is, control unit 1049, on receiving an instruction from DVD-ROM drive 1046 via input unit 45 to reproduce an AV data file, performs "Av data reproduction control;" if received an instruction to copy an AV data file in DVD-ROM 41, performs "AV data copy control."

However, different from the operation in the first embodiment, control unit 1049 operates as a main force in executing the reproduction and copy.

For the "AV data reproduction control," control unit 1049 judges whether the specified file is the file that stores AV data by checking whether the name of the directory storing the specified file is "DVD-Video." If judged as the AV data file, control unit 1049 starts the reproduction control of the AV data file. More specifically, control unit 1049 controls the authentication between DVD-ROM drive 1046 and AV signal processing unit 1047, then reads the AV data file from DVD-ROM drive 1046, and reproduces the file by writing the file into AV signal processing unit 1047. If judged as the non-AV data file, control unit 1049 notifies the user of an error by a beep and the like.

For the "AV data copy control," control unit 1049 similarly judges whether the specified file is the file that stores AV data. If judged as the AV data file, control unit 1049 starts the copy control of the AV data file. More specifically, control unit 1049 controls the authentication between DVD-ROM drive 1046 and DVD-RAM drive 1910, then reads the AV data file from DVD-ROM drive 1046, and writes the file into DVD-RAM drive 1910 for recording. If judged as the non-AV data file, control unit 1049 notifies the user of an error by a beep and the like.

For the "data copy control," control unit 1049 similarly judges whether the specified file is the file that stores AV data. If judged as the non-AV data file, control unit 1049 reads the non-AV data file and writes the file into HD apparatus 44. If judged as the AV data file, control unit 1049 copyright protection process.

### <Command List>

Fig.30 shows the commands used in the above description. These commands are control instructions issued from control unit 1049 to other apparatuses 44, 1046, 1910, 1047 via I/O bus 1042.

### <Information Processing System Operation>

The following is a description of the operation of the information processing system constructed as above for the following cases: (1) a file is copied from DVD-ROM 41 to DVD-RAM 99; and (2) a file in DVD-ROM 41 is reproduced. Note that, as mentioned earlier, the file management information is stored in main memory 49M in control unit 1049 during the initialization performed when DVD-ROM 41 is loaded into DVD-ROM drive 1046.

### <Copy to DVD-RAM 99>

The following is a description of the operation of the information processing system when a file is copied from DVD-ROM 41 to DVD-RAM 99.

Fig.31 shows a series of communications in the above copying performed between control unit 1049, DVD-ROM drive 1046, and DVD-RAM drive 1910.

The copy consists of three main processes, namely, phase R (Q320-Q328), phase S (Q329-Q336), and phase D (Q337-Q340).

In phase R, DVD-ROM drive 1046 authenticates DVD-RAM drive 1910 as a formal data reception apparatus; in phase S, DVD-RAM drive 1910 authenticates DVD-ROM drive 1046 as a formal data transmission apparatus; in phase D, digital data is transferred from VD-ROM drive 1046 to DVD-RAM drive 1910.

### <Phase R>

In phase R, control unit 1049 outputs the data reception apparatus authentication command (CHALLENGE_RECEIVER) to DVD-ROM drive 1046, which is the data transmission apparatus (Q320).

DVD-ROM drive 1046, on receiving the data reception apparatus authentication command (CHALLENGE_RECEIVER), generates authentication data C1 (=E(S,R1||R2)) by using encryption/authentication circuit 1510 and returns the authentication data C1 to control unit 1049 (Q321).

Control unit 1049, on receiving the authentication data C1, outputs data reception apparatus proof command (PROOF RECEIVER) and the authentication data C1 to DVD-RAM drive 1910 (Q323 and Q324). DVD-RAM drive 1910, on receiving the data reception apparatus proof command (PROOF_RECEIVER), performs an operation on the authentication data C1 with decryption/authentication circuit 1110 to obtain R2, which is used as proof data K1.

Control unit 1049 then outputs proof data acquire command (GET_PROOF_INFO) to DVD-RAM drive 1910 (Q325). In response to it, DVD-RAM drive 1910 returns the proof data K1 to control unit 1049 (Q326).

Control unit 1049, on receiving the proof data K1, outputs data reception apparatus confirmation command (CONFIRM RECEIVER) and the proof data K1 to DVD-ROM drive 1046 (Q327 and Q328). DVD-ROM drive 1046, on receiving the data reception apparatus confirmation command (CONFIRM_RECEIVER), checks the proof data K1 by using encryption/authentication circuit 1510, judges whether the authentication with the data reception apparatus, namely, DVD-RAM drive 1910 has succeeded, and stores the judgement result inside. More specifically, encryption/ authentication circuit 1510 judges whether the proof data K1 is equivalent to R2. If equivalent, it indicates the success of the authentication that the data reception apparatus is a formal data reception apparatus.

### <Phase S>

Control unit 1049 outputs data transmission apparatus authentication command (CHALLENGE_SENDER) to DVD-RAM drive 1910 (Q329).

DVD-RAM drive 1910, on receiving the data transmission apparatus authentication command (CHALLENGE_SENDER), generates authentication data C2 (=D(S,R3||R4)) by using decryption/authentication circuit 1110 and returns the authentication data C2 to control unit 1049 (Q330).

Control unit 1049, on receiving the authentication data C2, outputs data transmission apparatus proof command (PROOF SENDER) and the authentication data C2 to DVD-ROM drive 1046 (Q331 and Q332). DVD-ROM drive 1046, on receiving the data transmission apparatus proof command (PROOF SENDER), performs an operation on the authentication data C2 with encryption/authentication circuit 1510 to obtain R4, which is used as proof data K2.

Control unit 1049 then outputs proof data acquire command (GET_PROOF_INFO) to DVD-ROM drive 1046 (Q333). In response to it, DVD-ROM drive 1046 returns the proof data K2 to control unit 1049 (Q334).

Control unit 1049, on receiving the proof data K2, outputs data transmission apparatus confirmation command (CONFIRM_SENDER) and the proof data K2 to DVD-RAM drive 1910 (Q335 and Q336). DVD-RAM drive 1910, on receiving the data transmission apparatus confirmation command (CONFIRM_SENDER), checks the proof data K2 by using decryption/authentication circuit 1110, judges whether the authentication with DVD-RAM drive 1910 has succeeded, and stores the judgement result inside. More specifically, decryption/ authentication circuit 1110 judges whether the proof data K2 is equivalent to R4. If equivalent, it indicates the success of the authentication that the data transmission apparatus is a formal data transmission apparatus.

### <Phase D>

Control unit 1049 issues AV data read command (READ_AV) to DVD-ROM drive 1046 (Q337).

DVD-ROM drive 1046, on receiving the AV data read command (READ_AV), reads data from DVD-ROM 41 by the specified address and stores the user data of the data into user data memory 1303, the CGMS control data into CGMS control data memory 1302. DVD-ROM drive 1046 then judges whether the user data is AV data by referring to the CGMS control data.

If AV data, DVD-ROM drive 1046 refers to the judgement result held inside to judge whether the authentication that DVD-RAM drive 1910 is a formal data reception apparatus has succeeded.

If succeeded, encryption/authentication circuit 1510 encrypts the user data (2,048 bytes); if failed, user data exchange circuit 506 converts the user data into NULL data.

DVD-ROM drive 1046 outputs the CGMS control data (6 bytes) and the encrypted user data (2,048) or the NULL data, that is, 2,054 bytes of digital data in total in a data transfer unit of 2,054 to control unit 1049 (Q338). Note that the encryption key used in the present encryption is data R1||R3 which is made by combining R1, namely a random number used when authentication data C1 is generated, with R3, namely a random number included in the authentication data received from DVD-RAM drive 1910. The encrypted AV data is equivalent to E(R1||R3,DATA).

Control unit 1049, on receiving digital data E(R1||R3,DATA) from DVD-ROM drive 1046, outputs the digital data and AV data record command (WRITE_AV) to DVD-RAM drive 1910 (Q339 and Q340.

DVD-RAM drive 1910, on receiving the digital data of 2,054 bytes, stores the user data of the digital data into user data memory 103, the CGMS control data into CGMS control data memory 102.

DVD-RAM drive 1910 judges whether the user data is copy-permitted data and whether the previous authentication has been successful.

If the authentication has been successful and the user data is copy-permitted, CGMS data identify/update circuit 104 updates the CGMS control data. Decryption/authentication circuit 1110 generates decryption key R1||R3 and decrypts the user data using the decryption key. Data record circuit 101 then records the decrypted user data (D(R1||R3,DATA)) and the updated CGMS control data into DVD-RAM 99.

If the authentication has failed or the user data is copy-prohibited digital data, user data exchange circuit 106 converts the user data stored in user data memory 103 into NULL data. Data record circuit 101 then records the NULL data and the CGMS control data into DVD-RAM 99.

By repeating the above process for a specified length of data to be transferred, the process of copying the AV data file completes.

The following is a description of the above process with reference to the flowchart.

Fig.32 is a flowchart showing the procedure of copying an AV data file from DVD-ROM 41 to DVD-RAM 99.

Fig.33 is a flowchart showing the detailed procedure of process HH appearing in Fig.32.

Fig.34 is a flowchart showing the detailed procedure of process II appearing in Fig.32.

These three flowcharts respectively correspond to Figs.14, 16, and 17 in the first embodiment. The features different from those in the first embodiment are described below.

In the present copy operation, control unit 1049 controls copying of the AV data file from DVD-ROM 41 to DVD-RAM 99. Accordingly, AV signal processing unit 47 does not transfer the file in between as in the first embodiment.

The process (S1302) in which DVD-ROM drive 1046 authenticates DVD-RAM drive 1910 corresponds to phase R in Fig.31 in which the encryption technique is used.

Similarly, the process (S1303) in which DVD-RAM drive 1910 authenticates DVD-ROM drive 1046 corresponds to phase S in Fig.31 in which the encryption technique is used.

Process HH includes an encryption process (S1325) additionally. That is, if the read data is copy-permitted digital data and the previous authentication has been successful, the digital data is encrypted before it is transferred to DVD-RAM drive 1910.

Similarly, process II includes an decryption process (51335) additionally. That is, if the read data is copy-permitted digital data and the previous authentication has been successful, the digital data is decrypted before it is recorded into to DVD-RAM 99.

### <Reproduction>

The following is a description of the operation of the information processing system when an AV data file in DVD-ROM 41 is reproduced.

Note that the series of communications with commands or data performed here between control unit 1049, AV signal processing unit 1047, and DVD-ROM drive 1046 are almost the same as those shown in Fig.31. That is, "DVD-RAM drive 1910" shown in Fig.31 is replaced by "AV signal processing unit 1047," in the present communications. This is because AV signal processing unit 1047 and DVD-RAM drive 1910 are both data reception apparatuses that deal with AV data.

Fig.35 is a flowchart showing the procedure of reproducing an AV data file recorded in DVD-ROM 41.

Fig.36 is a flowchart showing the detailed procedure of process AA appearing in Fig.35.

Fig.37 is a flowchart showing the detailed procedure of process BB appearing in Fig.35.

These three flowcharts respectively correspond to Figs.21, 23, and 24 in the first embodiment. The features different from those in the first embodiment are described below.

In the present reproduction operation, control unit 1049 operates between DVD-ROM 41 and AV signal processing unit 1047. Accordingly, this reproduction differs from the one in the first embodiment in which the reproduction is performed between two SCSI devices, namely, AV signal processing unit 47 and DVD-ROM drive 1046.

The process (S1102) in which DVD-ROM drive 1046 authenticates AV signal processing unit 1047 corresponds to phase R in Fig.31 in which the encryption technique is used.

Similarly, the process (S1105) in which AV signal processing unit 1047 authenticates DVD-ROM drive 1046 corresponds to phase S in Fig.31 in which the encryption technique is used.

Process AA includes an encryption process (S1115) additionally. That is, if the read digital data is AV data and the previous authentication has been successful, the digital data is encrypted before it is transferred to AV signal processing unit 1047.

Similarly, process BB includes an decryption process (S1123) additionally. That is, if the input digital data is AV data and the previous authentication has been successful, the digital data is decrypted before it is decoded.

### <summary>

As understood from the above description, a data reception device (DVD-ROM drive 1046) of the information processing system in the present invention includes a control unit which makes a control so that the AV data is encrypted then output only when it is judged that the digital data includes AV data and that the data reception apparatus is a formal data reception apparatus.

A data reception device (AV signal processing unit 1047) of the information processing system in the present invention has a function of decrypting the encrypted digital data and converting the digital data into image data and includes an authentication unit which generates and outputs authentication data indicating the above function. With this construction, the information processing system including the data transmission apparatus and the data reception apparatus of the present invention may prohibit the AV data from being output to an apparatus other than the formal data reception apparatuses which are allowed to reproduce the AV data.

Therefore, it is possible to protect the copyright of the AV data even if the AV data read with AV data read command (READ_AV) exists in main memory 128M instead of being output to AV signal processing unit 1047 for some reason, for example, with an error in the reproduction control program loaded into control unit 1049. This is because the data stored in main memory 128M has been encrypted and therefore it is impossible to reproduce nor amend the data even if it is transferred from main memory 128M to a secondary storage such as a hard disk apparatus.

In the above encryption and decryption of the present embodiment, the encryption key and decryption key are generated for each authentication with different authentication data. This construction enables encrypting of the transmission AV data with different encryption key for each authentication. Therefore, even if an encryption key is known, the encryption is effective in the following AV data transfer if the authentication timing differs from one another.

Also, in the above encryption and decryption of the present embodiment, the encryption key and decryption key are generated with first authentication data and second authentication data, where the first authentication data is generated by the data transmission apparatus and is different for each authentication, and the second authentication data is generated by the data reception apparatus and is different for each authentication. This construction enables decrypting of the encrypted AV data only when the data transmission apparatus and data reception apparatus in the AV data transfer are both formal apparatuses. This achieves transferring of AV data with higher security.

The reason for transferring AV data with higher security is described below by demonstrating a malfunction which may occur when the encryption key used is determined by either of the two apparatuses in the data transfer.

Suppose only the data reception apparatus generates the encryption key and decryption key. In this case, the data reception apparatus transmits an encryption key for encrypting the AV data to the data transmission apparatus before the data reception apparatus receives the encrypted AV data. The data transmission apparatus then encrypts the AV data with the encryption key and transmits the encrypted AV data to the data reception apparatus. The data reception apparatus, on receiving the AV data, reproduces the AV data by using a decryption key corresponding to the encryption key.

Suppose, under the above condition, known are at least a set of an encryption key, which is transmitted from the data transmission apparatus, and the decryption method of decrypting the data encrypted with the encryption key. In this case, it is possible for an unauthorized data reception apparatus, which uses the known pair of the encryption key and decryption method, to generate a malfunction by transferring the encryption key to the formal data transmission apparatus to output the AV data encrypted with the same encryption key.

In the case of the present invention, on the contrary, the encryption key and decryption key are generated with a cooperation between the data transmission apparatus and data reception apparatus. As a result, the above malfunction is prevented since the encryption key is not determined only by a value output from the data reception apparatus.

In the information processing system of the present invention, it is judged whether the digital data recorded in an information record medium is AV data by referring to the data attribute flag stored in the header area of each sector. This enables the AV data protection in a smaller unit, namely, AV data protection for each sector.

### <Notes>

The present invention is not limited to the contents of the information processing apparatus described above in Second Embodiment.

In Second Embodiment, each of encryption/authentication circuit 1510 of DVD-ROM drive 1046, decryption/authentication circuit 1110 of DVD-RAM drive 1910, and decryption/ authentication circuit 1110 of AV signal processing unit 1047 has a pair of secret keys S and an encryption function (or a decryption function). These circuits generate authentication data and proof data and encrypts (or decrypts) the digital data. However, the method is not limited to the above construction. For example, a different encryption function may be used for each of the generation of authentication data, generation of proof data, and encryption (or decryption) of digital data. This will improve the security in the copyright protection processes.

In Second Embodiment, the authentication with an encryption key is performed at phases R and S before data is transferred at phase D. However, either of phases R and S will do if it is possible to accept such a security level in which an encryption key is generated by a "one-way" authentication, that is, an authentication performed by one of two apparatuses involved.

In the protocol shown in Fig.31, control unit 1049 operates between the data transmission apparatus and data reception apparatus at phases R and s. However, the data transmission apparatus may be connected to the data reception apparatus by a signal line exclusively used by them and the authentication data may be directly transferred between them through the signal line.

In Second Embodiment, the AV data transferred through I/O bus 1042 is encrypted. However, the encryption and decryption performed for the AV data transfer may be omitted if it is acceptable to allow the AV data to be extracted during the data transfer by a malfunction. In this case, though the improvement in the security with the use of encryption key is not achieved, the AV data is protected with a simpler construction.

In both Embodiments, the digital data including AV data is recorded in DVD-ROM 41 or DVD-RAM 99. However, digital data record media other than DVD-ROMs and DVD-RAMs may be used as far as the locations of digital data stored in the media are identified. For example, information record media such as magnet-optical disks having the same sector construction may be used.

Further, media other than information record media such as optical disks may be used as far as the locations of digital data are identified. For example, data transfer media such as radio waves such as the broadcast wave or cables such as communication lines may be used as the media, where the "data transfer media" indicate the media which are typically defined as the physical layer under the Open Systems Interconnection (OSI), a communications protocol, and guarantee the digital data transfer. Examples of the data transfer media are the telephone line, internet LAN, satellite broadcast, etc. In this case, the digital data is transferred in units of packets through such a data transfer medium. The packet includes the header unit and the data unit. The construction of the packet is the same as that of the sector having the header unit and the data unit as shown in the present embodiments. Accordingly, the present invention may be applied to such media by forming a flag, which specifies whether the data stored in the data unit is AV data, in the header unit of the packet. In this case, the data transmission apparatus is not a disk drive but a receiver which receives information through a data transfer medium.

This invention may also be applied to the digital satelite broadcast which uses the transport stream stipulated in MPEG. In this case, data is transferred in a plurality of MPEG streams. Streams for management information are also used. The management information streams store information which manages a plurality of MPEG streams. The present invention may be achieved in such a construction by storing the data attribute information, which specifies whether another stream is AV data, and the CGMS data in the management information streams.

In the present embodiments, digital data compressed under MPEG2 is used as the image data. However, it is needless to say that MPEG4 is used instead of MPEG2.

In the present embodiments, DVD-ROM drives 46 and 1046, DVD-RAM drives 910 and 1910 are installed as hardware as shown in Figs.10, 11, 27, and 28. However, these apparatuses may be achieved as software. More specifically, these apparatuses may be achieved as programs including the steps in flowcharts shown in Figs. 14-24 and 31-37.

The information record media storing the above programs may be dealt with or circulated independently. It is possible to download the programs from the information record media to general-purpose DVD-ROM drives or DVD-RAM drives and to use these drives as the DVD-ROM drives or DVD-RAM drives of the present invention.

In the present embodiments, DVD-RAM drives 910 and 1910 only record digital data into DVD-RAM 99. It is needless to say, however, that these drives also read data from DVD-RAM 99. The procedure in reading data from DVD-RAM 99 is the same as that in reading data from DVD-ROM 41.

Video signal processing unit 48 and AV signal processing units 47 and 1047 may include connection units for connecting these apparatuses to I/O buses 42 and 1042. The connection units may be achieved as removable cards. In this case, AV signal processing units 47 and 1047 are equivalent to the AV signal processor card or the AV decoder card as generally called, video signal processing unit 48 equivalent to the video card.

In the present embodiments, video signal processing unit 48 includes a graphics generation function and a image combination function. However, the image combination function may be achieved as a video combination unit as an external element.

In the present embodiments, the control unit identifies the AV data files in the file system level by checking whether a target AV file is stored in a directory called "DVD-Video." However, the name of this directory for storing AV data may be defined as another name in a naming standard. Similarly, the names of AV data files and non-AV data files may be defined as other names. For example, the AV data files may be identified by establishing another standard of the AV data file names, setting a unified extension of the AV data file, and detecting the extension.

In the present embodiments, DVD-ROM drive 1046 outputs the user data after converting it into NULL data as a copyright protection process. However, the copyright protection process is not limited to the above. For example, an error code may be output instead of the NULL data.

In the present embodiments, AV signal processing units 47 and 1047 are an independent elements. However, these units may be MPEG decoders which perform the CGMS control. Therefore, these units may be included respectively in control units 49 and 1049 as MPEG soft decoders which, with a Discrete Cosine Transform (DCT) circuit and a CGMS control unit included, decode under MPEG by using a program.

SCSI and ATAPI are used as the digital interface in the information processing system respectively in the first and second embodiments. However, other digital interfaces such as those specified under IEEE P1394 may be used as far as they transfer digital AV data and connect to a plurality of apparatuses.

## Claims

1. A data reception apparatus for receiving digital data sent from a data transmission apparatus via a transmission path and recording the received digital data into an external medium, wherein the digital data includes image data and a use-form-specified code that specifies a use form of the image data, the data reception apparatus comprising:
authentication means for judging whether the data transmission apparatus is a formal data transmission apparatus for authentication;
reception means for receiving the digital data;
copy judgement means for judging whether recording of the digital data into the external medium is permitted by referring to the use-form-specified code included in the received digital data; and
record means for recording the digital data into the external medium if the authentication means judges that the data transmission apparatus is the formal data transmission apparatus and the copy judgement means judges that recording of the digital data into the external medium is permitted.

2. The data reception apparatus of CLAIM 1, wherein
the use-form-specified code includes a maximum generation value which indicates an uppermost generation value in permitting the image data to be copied, wherein
the copy judgement means judges that recording of the digital data into the external medium is permitted if the maximum generation value of the use-form-specified code is at least one.

3. The data reception apparatus of CLAIM 2, wherein
the record means includes an update unit for updating the use-form-specified code by reducing the maximum generation value by one before the record means records the digital data into the external medium.

4. The data reception apparatus of CLAIM 3, wherein
the record means further includes a reception data exchange unit for converting the image data into meaningless data before the record means records the digital data into the external medium if either of following two conditions is satisfied: the authentication means judges that the data transmission apparatus is not the formal data transmission apparatus; and the copy judgement means judges that recording of the digital data into the external medium is not permitted.

5. The data reception apparatus of CLAIM 4, wherein
the external medium is a information record medium, wherein
the record means records the image data into a user data area in the information record medium and records the use-form-specified code into a header area corresponding to the user data area.

6. The data reception apparatus of CLAIM 5, wherein
the authentication means transmits authentication data to the data transmission apparatus, wherein the authentication data is generated based on a random number, wherein
the authentication means judges whether the data transmission apparatus is a formal data transmission apparatus for authentication by using proof data sent from the data transmission apparatus in response to the authentication data.

7. The data reception apparatus of CLAIM 6, wherein
the image data has been encrypted in advance, wherein
the record means includes a decryption unit for decrypting the image data before the record means records the digital data into the external medium.

8. The data reception apparatus of CLAIM 7, wherein
the decryption unit generates the decryption key based on the authentication data and decrypts the image data by using the decryption key.

9. A data transmission apparatus for retrieving digital data from an external medium and transmitting the digital data to a data reception apparatus via a transmission path, wherein the digital data includes user data and a use-form-specified code that specifies a use form of the user data, the data transmission apparatus comprising:
data retrieval means for retrieving the digital data from the external medium;
data type judgement means for judging whether the user data included in the digital data is image data;
authentication means for, for authentication, judging whether the data reception apparatus is a formal data reception apparatus, which is allowed to process the image data, by referring to the use-form-specified code; and
transmission means for transmitting the digital data to the data reception apparatus via the transmission path if the authentication means judges that the data reception apparatus is the formal data reception apparatus.

10. The data transmission apparatus of CLAIM 9, wherein
the use-form-specified code specifies whether a reproduction of the image data is permitted and whether copying of the image data is permitted, wherein
the authentication means authenticates the data reception apparatus as the formal data reception apparatus if the use-form-specified code specifies that only the reproduction of the image data is permitted and if the data reception apparatus performs only reproduction, and the authentication means authenticates the data reception apparatus as the formal data reception apparatus if the use-form-specified code specifies that only copying of the image data is permitted and if the data reception apparatus records the image data.

11. The data transmission apparatus of CLAIM 10, wherein
the use-form-specified code includes a maximum generation value which indicates an uppermost generation value in permitting the image data to be copied, wherein
the authentication means authenticates the data reception apparatus as the formal data reception apparatus if if the data reception apparatus records the image data and if the maximum generation value of the use-form-specified code is at least one.

12. The data transmission apparatus of CLAIM 11, wherein
the transmission means includes a transmission data exchange unit for converting the image data into meaningless data before the transmission means transmits the digital data if the authentication means does not authenticate the data reception apparatus as the formal data reception apparatus.

13. The data transmission apparatus of CLAIM 12, wherein
the digital data further includes a data attribute code which indicates an attribute of the user data, wherein
the data type judgement means judges whether the user data included in the digital data is image data based on a value of the data attribute code.

14. The data transmission apparatus of CLAIM 13, wherein
the external medium is a information record medium which prestores the digital data, wherein
the data retrieval means retrieves the data attribute code and the use-form-specified code from a header area corresponding to a user data area in the information record medium, wherein the user data area is an area in which the user data is stored.

15. The data transmission apparatus of CLAIM 14, wherein
the authentication means transmits authentication data to the data reception apparatus, wherein the authentication data is generated based on a random number, wherein
the authentication means judges whether the data reception apparatus is the formal data reception apparatus for authentication by using proof data sent from the data reception apparatus in response to the authentication data.

16. The data transmission apparatus of CLAIM 15, wherein
the transmission means includes an encryption unit for encrypting the user data in the digital data before the transmission means transmits the digital data.

17. The data transmission apparatus of CLAIM 16, wherein
the encryption unit generates the encryption key based on the authentication data and encrypts the user data by using the encryption key.

18. An information processing system for copying digital data in which image data is included, the information processing system comprising:
a transmission path;
the data transmission apparatus of CLAIM 9 connected to the transmission path;
the data reception apparatus of CLAIM 1 connected to the transmission path; and
a control apparatus for, according to an instruction from an operator, controlling the the data transmission apparatus and the data reception apparatus so that the data transmission apparatus retrieves the digital data from the external medium and transmits the digital data to the data reception apparatus via the transmission path and that the data reception apparatus receives and records the digital data into the external medium.

19. The information processing system of CLAIM 18 further comprises:
a reproduction apparatus for converting the image data into an image signal and a voice signal if the user data in the digital data input is the image data and displaying graphics and outputting a voice respectively based on the image signal and the voice signal, wherein
the control means, according to an instruction from an operator, controls the the data transmission apparatus and the data reception apparatus so that the data transmission apparatus retrieves the digital data from the external medium and transmits the digital data to the reproduction apparatus via the transmission path and that the reproduction apparatus displays the graphics and outputs the voice.

20. The data transmission apparatus of CLAIM 19, wherein
the image data is generated by performing a frames compression on motion picture data whose horizontal resolution is of at least 450lpi.

21. A method of receiving digital data sent from a data transmission apparatus via a transmission path and recording the received digital data into an external medium, wherein the digital data includes image data and a use-form-specified code that specifies a use form of the image data, the method comprising:
authentication step for judging whether the data transmission apparatus is a formal data transmission apparatus for authentication;
reception step for receiving the digital data;
copy judgement step for judging whether recording of the digital data into the external medium is permitted by referring to the use-form-specified code included in the received digital data; and
record step for recording the digital data into the external medium if in the authentication step it is judged that the data transmission apparatus is the formal data transmission apparatus and in the copy judgement step it is judged that recording of the digital data into the external medium is permitted.

22. The method of CLAIM 21, wherein
the use-form-specified code includes a maximum generation value which indicates an uppermost generation value in permitting the image data to be copied, wherein
in the copy judgement step it is judged that recording of the digital data into the external medium is permitted if the maximum generation value of the use-form-specified code is at least one, wherein
the record step includes a step for updating the use-form-specified code by reducing the maximum generation value by one before in the record step the digital data is recorded into the external medium, wherein
the record step further includes a step for converting the image data into meaningless data before in the record step the digital data is recorded into the external medium if either of following two conditions is satisfied: in the authentication step it is judged that the data transmission apparatus is not the formal data transmission apparatus; and in the copy judgement step it is judged that recording of the digital data into the external medium is not permitted.

23. The data transmission apparatus of CLAIM 22, wherein
in the authentication step authentication data is transmitted to the data transmission apparatus, wherein the authentication data is generated based on a random number, wherein
in the authentication step it is judged whether the data transmission apparatus is a formal data transmission apparatus for authentication by using proof data sent from the data transmission apparatus in response to the authentication data, wherein
the image data has been encrypted in advance, wherein
the record step includes a step for decrypting the image data before in the record step the digital data is recorded into the external medium.

24. A record medium storing a program which includes the steps of CLAIM 21.

25. A record medium storing a program which includes the steps of CLAIM 22.

26. A record medium storing a program which includes the steps of CLAIM 23.
